# EUROPEAN PATENT APPLICATION

(11) **EP 4 583 493 A1**
(43) Date of publication of application: **09.07.2025**
(21) Application number: 22961735.2
(22) Date of filing: 13.10.2022
(51) Int. Cl.: H04L 67/566, H04W 76/10, H04L 67/51

(54) **CAPABILITY CALLING METHOD AND COMMUNICATION APPARATUS**

(71) Applicant: Huawei Technologies Co., Ltd., Shenzhen, Guangdong 518129 (CN)
(72) Inventor: WU, Shaoyun, Shenzhen, Guangdong 518129 (CN); XING, Weijun, Shenzhen, Guangdong 518129 (CN); PENG, Chenghui, Shenzhen, Guangdong 518129 (CN); WANG, Jun, Shenzhen, Guangdong 518129 (CN); WANG, Fei, Shenzhen, Guangdong 518129 (CN)
(74) Representative: Pfenning, Meinig & Partner mbB
(86) International application number: PCT/CN2022/125073
(87) International publication number: WO 2024/077546

(57) **Abstract**

This application provides a capability invocation method and a communication apparatus. The method includes: A first node sends a first request message to a second node. The first request message is used to request the second node to provide a service of a first capability for the first node, and the first capability is a network capability that can be invoked and used. Further, the first node receives, from a third node, an identifier of a transmission channel between the first node and the second node. The transmission channel is used to transmit a capability invocation message corresponding to the first capability. In this method, a capability requester (the first node) and a capability provider (the second node) may transmit the capability invocation message about the first capability through the transmission channel established by the third node. Capability invocation may be performed between various devices in a communication network architecture by using the capability invocation method, so that a capability invocation mode in the communication network architecture is more flexible, to meet user and industry requirements.

## Description

### TECHNICAL FIELD

This application relates to the field of communication technologies, and in particular, to a capability invocation method and a communication apparatus.

### BACKGROUND

Devices in a communication network architecture include a terminal device, a core network device, an access network device, and an application function (application function, AF) outside a network. Generally, a capability invocation mode between the devices includes: The terminal device can only serve as a capability invoker to invoke a capability of the core network device; and the AF can only serve as a capability invoker to invoke a capability of the core network device. The capability invocation mode is fixed.

With continuous development of technologies such as big data and artificial intelligence (artificial intelligence, AI), the fixed capability invocation mode between the devices in the communication network architecture cannot meet user and industry requirements.

### SUMMARY

This application provides a capability invocation method and a communication apparatus, so that devices in a communication network architecture can invoke capabilities of each other, to meet user and industry requirements.

According to a first aspect, this application provides a capability invocation method. The method includes: A first node sends a first request message to a second node. The first request message is used to request the second node to provide a service of a first capability for the first node, and the first capability is a network capability (or a resource) that can be invoked and used. Further, the first node receives, from a third node, an identifier of a transmission channel between the first node and the second node. The transmission channel is used to transmit a capability invocation message corresponding to the first capability.

According to the method described in the first aspect, a capability requester (the first node) and a capability provider (the second node) may transmit the capability invocation message about the first capability through the transmission channel established by the third node. Capability invocation may be performed between various devices in a communication network architecture by using the capability invocation method, so that a capability invocation mode in the communication network architecture is more flexible, to meet user and industry requirements.

In a possible implementation, the first node sends the capability invocation message to the third node. The capability invocation message is used to invoke the first capability of the second node, and the capability invocation message includes the identifier of the transmission channel.

In a possible implementation, the transmission channel includes a transmission link used for signaling exchange, and/or a user plane tunnel used for user plane data exchange.

In a possible implementation, the first node sends a capability discovery request message to a fourth node. The capability discovery request message is used to discover the first capability, and the fourth node is a network device configured to manage a capability. Further, the first node receives a capability discovery response message from the fourth node, where the capability discovery response message indicates discovery success for the first capability; and sends the first request message to the second node based on the capability discovery response message. By implementing this possible implementation, before invoking the first capability, the capability requester needs to first submit the capability discovery request to a capability management function, so that the capability management function can perform centralized management on the capability, thereby improving coordination and security in a capability invocation process.

In a possible implementation, the capability discovery response message further includes token information corresponding to the second node, and the first request message includes the token information corresponding to the second node. By implementing this possible implementation, the security in the capability invocation process can be improved based on the token information.

In a possible implementation, the first request message further includes information about the first node and first information of the first capability. The information about the first node includes an identifier of the first node or a type of the first node, and the first information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes any one of a computing capability, a data capability, or a sensing capability.

In a possible implementation, the type of the first node is one of the following types: a terminal device, an access network device, an application function AF, or a network function NF; and a type of the second node is one of the following types: a terminal device, an access network device, an AF, or an NF.

In a possible implementation, when the type of the first node is the terminal device or the AF, the first node sends the first request message to the second node via the third node.

According to a second aspect, this application provides a capability invocation method. The method includes: A second node receives a first request message from a first node. The first request message is used to request the second node to provide a service of a first capability for the first node, and the first capability is a network capability (or a resource) that can be scheduled and used. The second node sends a first response message to a third node (a network device that establishes a transmission channel). The first response message is used to request to establish the transmission channel between the first node and the second node, and the transmission channel is used to transmit a capability invocation message corresponding to the first capability.

For beneficial effect of the method provided in the second aspect, refer to descriptions of beneficial effect of the method in the first aspect. Details are not described herein again.

In a possible implementation, the second node receives the capability invocation message from the first node through the transmission channel. The capability invocation message is used to invoke the first capability of the second node.

In a possible implementation, the transmission channel includes a transmission link used for signaling exchange, and/or a user plane tunnel used for user plane data exchange.

In a possible implementation, the second node sends a second request message to a fourth node. The second request message is used to register the first capability of the second node, and the fourth node is a network device configured to manage a capability. The second node receives a second response message from the fourth node. The second response message indicates a registration result of the second node for the first capability.

In a possible implementation, the second node receives a sixth request message from the fourth node. The sixth request message is used to query whether the second node can provide the service of the first capability for the first node. The second node sends a sixth response message to a fifth node. The sixth response message indicates that the second node can provide the service of the first capability for the first node.

In a possible implementation, the sixth response message includes token information corresponding to the second node.

In a possible implementation, the first request message further includes information about the first node and first information of the first capability. The information about the first node includes an identifier of the first node or a type of the first node, and the first information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes one or more of a computing capability, a data capability, or a sensing capability.

In a possible implementation, the type of the first node is one of the following types: a terminal device, an access network device, an application function AF, or a network function NF; and a type of the second node is one of the following types: a terminal device, an access network device, an AF, or an NF.

In a possible implementation, the type of the first node is the terminal device or the AF, and the second node receives the first request message from the first node via the third node.

According to a third aspect, this application provides a capability invocation method. The method includes: A third node receives a first response message from a second node. The first response message is used to request to establish a transmission channel between a first node and the second node, the transmission channel is used to transmit a capability invocation message corresponding to a first capability, and the first capability is a network capability (or a resource) that can be scheduled and used. The third node establishes the transmission channel based on the first response message; and sends an identifier of the transmission channel to the first node.

For beneficial effect of the method provided in the third aspect, refer to descriptions of beneficial effect of the method in the first aspect. Details are not described herein again.

In a possible implementation, the third node receives a capability invocation message from the first node, where the capability invocation message is used to invoke the first capability of the second node, and the capability invocation message includes the identifier of the transmission channel. The third node sends the capability invocation message to the second node through the transmission channel indicated by the identifier of the transmission channel.

In a possible implementation, the transmission channel includes a transmission link used for signaling exchange, and/or a user plane tunnel used for user plane data exchange.

In a possible implementation, a type of the first node is one of the following types: a terminal device, an access network device, an application function AF, or a network function NF; and a type of the second node is one of the following types: a terminal device, an access network device, an AF, or an NF.

In a possible implementation, when the type of the first node is the terminal device or the AF, the third node receives a first request message from the first node. The first request message is used to request the second node to provide a service of the first capability for the first node. The third node sends the first request message to the second node.

In a possible implementation, the first request message includes information about the first node and first information of the first capability. The information about the first node includes an identifier of the first node or the type of the first node, and the first information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes any one of a computing capability, a data capability, or a sensing capability.

In a possible implementation, the first request message further includes token information corresponding to the second node.

According to a fourth aspect, this application provides a capability registration method. The method includes: A fourth node (a network device configured to manage a capability) receives a second request message from a second node. The second request message is used to register a first capability of the second node, and the first capability is a network capability (or a resource) that can be scheduled and used. The fourth node sends a second response message to the second node. The second response message indicates a registration result of the second node for the first capability.

According to the capability registration method described in the fourth aspect, each device in a communication network may register a capability of the device with the network device (namely, the fourth node) that manages the capability, so that the device can provide the capability for another device, and a capability invocation mode in the communication network is more flexible, to meet user and industry requirements.

In a possible implementation, the fourth node sends a third request message to a fifth node (a network device configured to manage policy information and/or subscription information). The third request message is used to authenticate permission of the second node to register the first capability. The fourth node receives a third response message from the fifth node. The third response message indicates whether the second node is allowed to register the first capability. Further, the fourth node sends the second response message to the second node based on the third response message. By implementing this possible implementation, when the second node registers the capability, security of the communication network can be improved by authenticating the permission of the second node to register the capability.

In a possible implementation, the fourth node sends the second response message to the second node based on local configuration information. The local configuration information includes indication information indicating whether to accept registration of the first capability by the second node.

In a possible implementation, a type of the second node is one of the following types: a terminal device, an access network device, an application function AF, or a network function NF.

In a possible implementation, when the type of the second node is the terminal device or the AF, the fourth node receives the second request message from the second node via a sixth node. The sixth node is configured to connect the second node to a core network. In addition, the fourth node sends the second response message to the second node via the sixth node. By implementing this possible implementation, the terminal device or the AF may also perform capability registration, so that capability providers are diversified, and a capability invocation mode in a communication system is more flexible.

In a possible implementation, the second request message includes information about the second node and first information of the first capability. The information about the second node includes an identifier of the second node or the type of the second node, and the first information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes one or more of a computing capability, a data capability, or a sensing capability.

In a possible implementation, the third request message includes the information about the second node and second information of the first capability, and the second information of the first capability includes at least one or more of the following: the type of the first capability, the name of the first capability, and the version of the first capability.

In a possible implementation, if the registration result is registration failure, the second response message further includes a cause value corresponding to the registration failure; or if the registration result is registration success, the fourth node stores the first capability of the second node.

According to a fifth aspect, this application provides a capability registration method. The method includes: A second node sends a second request message to a fourth node (a network device configured to manage a capability). The second request message is used to register a first capability of the second node, and the first capability is a network capability (or a resource) that can be scheduled and used. The second node receives a second response message from the fourth node. The second response message indicates a registration result of the second node for the first capability.

For beneficial effect of the method provided in the fifth aspect, refer to descriptions of beneficial effect of the method in the fourth aspect. Details are not described herein again.

In a possible implementation, a type of the second node is one of the following types: a terminal device, an access network device, an application function AF, or a network function NF.

In a possible implementation, the type of the second node is the terminal device or the AF. In this case, the second node sends the second request message to a first network device via a sixth node. The sixth node is configured to connect the second node to a core network. In addition, the second node receives the second response message from the fourth node via the sixth node.

In a possible implementation, the second request message includes information about the second node and first information of the first capability. The information about the second node includes an identifier of the second node or the type of the second node, and the first information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes one or more of a computing capability, a data capability, or a sensing capability.

In a possible implementation, the registration result is registration failure, and the second response message further includes a cause value corresponding to the registration failure.

According to a sixth aspect, this application provides a capability discovery method. The method includes: A fourth node (a network device configured to manage a capability) receives a fourth request message from a first node. The fourth request message is used to request to discover a first capability, and the first capability is a network capability (or a resource) that can be scheduled and used. The fourth node sends a fourth response message to the first node. The fourth response message indicates a discovery result for the first capability.

According to the method provided in the sixth aspect, when the first node (a capability requester) requires to invoke or discover the first capability, the first node may send the request to fourth node to discover whether another device in a communication network can provide the first capability, so that the first node can subsequently invoke the first capability provided by the another node, thereby making a capability invocation mode in the communication network flexible.

In a possible implementation, the fourth node sends a fifth request message to a fifth node (a network device configured to manage policy information and/or subscription information). The fifth request message is used to authenticate permission of the first node to discover the first capability. The fourth node receives a fifth response message from the fifth node. The fifth response message indicates whether the first node is allowed to discover the first capability. The fourth node sends the fourth response message to the first node based on the fifth response message. By implementing this possible implementation, the first node can discover the first capability only when the fifth node successfully authenticates the permission of the first node, thereby improving security of the node that provides the first capability.

In a possible implementation, the fourth node sends the fourth response message to the first node based on local configuration information. The local configuration information includes indication information indicating whether to accept discovery of the first node for the first capability.

In a possible implementation, a type of the first node is one of the following types: a terminal device, an access network device, an application function AF, or a network function NF.

In a possible implementation, when the type of the first node is the terminal device or the AF, the fourth node receives the fourth request message from the first node via a third node. The third node is configured to connect the first node to a core network. In addition, the fourth node sends the fourth response message to the first node via the third node.

In a possible implementation, the fourth request message includes information about the first node and third information of the first capability. The information about the first node includes an identifier of the first node or the type of the first node, and the third information of the first capability includes one or more of the following information: a type of the node that provides the first capability, a type of the first capability, a name of the first capability, and a version of the first capability.

In a possible implementation, the type of the first capability includes any one of a computing capability, a data capability, or a sensing capability.

In a possible implementation, the fifth request message includes the information about the first node and second information of the first capability, and the second information of the first capability includes at least one or more of the following: the type of the first capability, the name of the first capability, and the version of the first capability.

In a possible implementation, the fourth response message indicates that the discovery result for the first capability is capability discovery failure, and the fourth response message further includes a cause value corresponding to the capability discovery failure.

In a possible implementation, the fourth response message indicates that the discovery result for the first capability is capability discovery success. The fourth response message further includes a capability list corresponding to the first capability, and the capability list includes first information of the first capability, or the capability list includes a plurality of nodes that provide the first capability and first information of the first capability corresponding to each node. The first information of the first capability includes one or more of the following information: the type of the first capability, the name of the first capability, the version of the first capability, an invocation parameter of the first capability, an interface address of the first capability, and a network identifier corresponding to the first capability.

In a possible implementation, the fourth response message indicates that the discovery result for the first capability is capability discovery success. In this case, the fourth node may further determine a second node. The second node is configured to provide a service of the first capability for the first node. The fourth node sends a sixth request message to the second node. The sixth request message is used to query whether the second node can provide the service of the first capability for the first node. The fourth node receives a sixth response message from the second node, where the sixth response message indicates that the second node can provide the service of the first capability for the first node. By implementing this possible implementation, when the fourth node determines that the first node can discover the first capability, the fourth node may further determine a capability provider (namely, the second node) of the first capability for the first node, so that the first node can conveniently invoke the first capability.

In a possible implementation, the fourth node obtains requirement information of the first node for invoking the service of the first capability; and determines the second node based on the requirement information. The requirement information includes one or more of the following information: a service requirement of the first node for the first capability, a location correlation requirement between the first node and the second node that provides the first capability, a load status of the second node, or a priority of the second node selected by the first node to provide the first capability. By implementing this possible implementation, the capability provider (namely, the second node) determined by the fourth node for the first node can better meet the requirement of the first node.

In a possible implementation, the sixth response message further includes token information corresponding to the second node, and the fourth response message further includes the token information.

According to a seventh aspect, this application provides a capability discovery method. The method includes: A first node sends a fourth request message to a fourth node (a network device configured to manage a capability). The fourth request message is used to request to discover a first capability, and the first capability is a network capability (or a resource) that can be scheduled and used. The first node receives a fourth response message from the fourth node. The fourth response message indicates a discovery result for the first capability.

For beneficial effect of the method provided in the seventh aspect, refer to descriptions of beneficial effect of the method in the sixth aspect. Details are not described herein again.

In a possible implementation, a type of the first node is one of the following types: a terminal device, an access network device, an application function AF, or a network function NF.

In a possible implementation, when the type of the first node is the terminal device or the AF, the first node sends the fourth request message to the fourth node via a third node. The third node is configured to connect the first node to a core network. The first node receives the fourth response message from the fourth node via the third node.

In a possible implementation, the fourth request message includes information about the first node and third information of the first capability. The information about the first node includes an identifier of the first node or the type of the first node, and the third information of the first capability includes one or more of the following information: a type of a node that provides the first capability, a type of the first capability, a name of the first capability, and a version of the first capability.

In a possible implementation, the fourth response message indicates that the discovery result for the first capability is capability discovery failure, and the fourth response message further includes a cause value corresponding to the capability discovery failure.

In a possible implementation, the fourth response message indicates that the discovery result for the first capability is capability discovery success. The fourth response message further includes a capability list corresponding to the first capability, and the capability list includes first information of the first capability, or the capability list includes a plurality of nodes that provide the first capability and first information of the first capability corresponding to each node. The first information of the first capability includes one or more of the following information: the type of the first capability, the name of the first capability, the version of the first capability, an invocation parameter of the first capability, an interface address of the first capability, and a network identifier corresponding to the first capability.

In a possible implementation, the fourth response message indicates that the discovery result for the first capability is capability discovery success, and the fourth response message further includes token information corresponding to the second node.

According to an eighth aspect, this application provides an authorization information maintenance method. The method includes: A fifth node (a network device configured to manage subscription information and/or policy information) obtains policy information and/or subscription information of a node for a first capability. The first capability is a network capability (or a resource) that can be invoked. The fifth node records the policy information and/or subscription information of the node for the first capability.

According to the method provided in the eighth aspect, a network side may record the policy information and subscription information of the node for the first capability, so that the node performs authentication when registering, discovering, and invoking the first capability, thereby improving capability management security of the network side.

In a possible implementation, a type of the node is one of the following types: a terminal device, an access network device, an application function AF, or a network function NF.

In a possible implementation, the node is the terminal device or the AF. In this case, the fifth node receives the policy information and/or subscription information from the node via a third node. The third node is configured to connect the node to a core network.

In a possible implementation, the fifth node sends a policy information and/or subscription information obtaining request to the node via the third node.

In a possible implementation, the node is a node that requests to invoke the first capability. The fifth node receives an authentication request message from the third node. The authentication request message is used to authenticate permission of the node to invoke the first capability. The fifth node sends an authentication response message to the third node. The authentication response message indicates whether the node has the permission to invoke the first capability.

In a possible implementation, the authentication request message includes information about the node and second information of the first capability. The information about the node includes an identifier of the node or the type of the node. The second information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes any one of a computing capability, a data capability, or a sensing capability.

In a possible implementation, the node is a node that requests to register the first capability. The fifth node receives a third request message from a fourth node. The third request message is used to authenticate permission of the node to register the first capability, and the fourth node is a network device configured to manage a capability. The fifth node sends a third response message to the fourth node based on the policy information and/or subscription information corresponding to the node. The third response message indicates whether the node is allowed to register the first capability.

In a possible implementation, the third request message includes the information about the node and the second information of the first capability. The information about the node includes the identifier of the node or the type of the node, and the second information of the first capability includes at least one or more of the following: the type of the first capability, the name of the first capability, and the version of the first capability.

In a possible implementation, the node is a node that requests to discover the first capability. The fifth node receives a fifth request message sent by the fourth node. The fifth request message is used to authenticate permission of the node to discover the first capability. The fifth node sends a fifth response message to the fourth node based on the policy information and/or subscription information corresponding to the node. The fifth response message indicates whether the node is allowed to discover the first capability.

In a possible implementation, the fifth request message includes the information about the node and third information of the first capability. The information about the node includes the identifier of the node or the type of the node, and the third information of the first capability includes at least one or more of the following: a type of a node that provides the first capability, the type of the first capability, the name of the first capability, and the version of the first capability.

According to a ninth aspect, this application provides a communication apparatus. The apparatus may be a node (or referred to as a node device, including a first node to a fifth node), or may be an apparatus in a node, or may be an apparatus that can be used in matching with a node device. Alternatively, the communication apparatus may be a chip system, and the communication apparatus may perform the methods according to the first aspect to the eighth aspect. A function of the communication apparatus may be implemented by hardware, or may be implemented by hardware executing corresponding software. The hardware or the software includes one or more units corresponding to the foregoing function. The unit may be software and/or hardware. For operations performed by the communication apparatus and beneficial effect thereof, refer to the methods according to the first aspect to the eighth aspect, and beneficial effect thereof. Repeated content is not described again.

According to a tenth aspect, this application provides a communication apparatus. The communication apparatus includes a processor, and when the processor invokes a computer program in a memory, the methods performed by the nodes in the methods according to the first aspect to the eighth aspect are performed.

According to an eleventh aspect, this application provides a communication apparatus. The communication apparatus includes a processor and a memory. The memory is configured to store computer-executable instructions. The processor is configured to execute the computer-executable instructions stored in the memory, to enable the communication apparatus to perform the methods performed by the nodes in the methods according to the first aspect to the eighth aspect.

According to a twelfth aspect, this application provides a communication apparatus. The communication apparatus includes a processor, a memory, and a transceiver. The transceiver is configured to receive a signal or send a signal. The memory is configured to store a computer program. The processor is configured to invoke the computer program from the memory to perform the methods performed by the nodes in the methods according to the first aspect to the eighth aspect.

According to a thirteenth aspect, this application provides a communication apparatus. The communication apparatus includes a processor and an interface circuit. The interface circuit is configured to receive computer-executable instructions and transmit the computer-executable instructions to the processor. The processor runs the computer-executable instructions to perform the methods performed by the nodes in the methods according to the first aspect to the eighth aspect.

According to a fourteenth aspect, this application provides a computer-readable storage medium. The computer-readable storage medium is configured to store computer-executable instructions. When the computer-executable instructions are executed, the methods performed by the nodes in the methods according to the first aspect to the eighth aspect are implemented.

According to a fifteenth aspect, this application provides a communication apparatus. The communication apparatus includes a function or a unit configured to perform the method according to any one of the first aspect to the eighth aspect.

According to a sixteenth aspect, this application provides a computer program product including a computer program. When the computer program is executed, the methods performed by the nodes in the methods according to the first aspect to the eighth aspect are implemented.

According to a seventeenth aspect, this application provides a communication system. The communication system includes the nodes (namely, the first node, the second node, and the third node) in the first aspect to the third aspect; or the communication system includes the nodes (namely, the second node and the fourth node) in the fourth aspect and the fifth aspect; or the communication system includes the nodes (namely, the first node and the fourth node) in the sixth aspect and the seventh aspect; or the communication system includes the node (namely, the fifth node) in the eighth aspect.

### BRIEF DESCRIPTION OF DRAWINGS

FIG. 1a is a diagram of network system architecture according to an embodiment of this application;
FIG. 1b is a diagram of a core network architecture according to an embodiment of this application;
FIG. 1c is a diagram of another core network architecture according to an embodiment of this application;
FIG. 2 is a schematic flowchart of a capability invocation method according to an embodiment of this application;
FIG. 3 is a schematic flowchart of a capability registration method according to an embodiment of this application;
FIG. 4 is a schematic flowchart of a capability discovery method according to an embodiment of this application;
FIG. 5 is a schematic flowchart of an authorization information maintenance method according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

To make the objectives, technical solutions, and advantages of this application clearer, the following further describes this application in detail with reference to the accompanying drawings.

In the specification, the claims, and the accompanying drawings of this application, the terms "first", "second", and the like are intended to distinguish between different objects but do not indicate a particular order. In addition, the terms "including", "having", and any other variant thereof are intended to cover a non-exclusive inclusion. For example, a process, a method, a system, a product, or a device that includes a series of operations or units is not limited to the listed operations or units, but optionally further includes an unlisted operation or unit, or optionally further includes another inherent operation or unit of the process, the method, the product, or the device.

An "embodiment" mentioned in this specification means that a particular characteristic, structure, or feature described with reference to embodiments may be included in at least one embodiment of this application. The phrase appear at various locations in this specification may neither necessarily mean a same embodiment, nor mean an independent or optional embodiment exclusive from another embodiment. It is explicitly and implicitly understood by persons skilled in the art that embodiments described in the specification may be combined with another embodiment.

In this application, "at least one (item)" means one or more, "a plurality of" means two or more, "at least two (items)" means two, three, or more, and "and/or" is used to describe a correspondence relationship between corresponding objects, and indicates that there may be three relationships. For example, "A and/or B" may indicate the following three cases: Only A exists, only B exists, and both A and B exist, where A and B may be singular or plural. The character "/" usually represents an "or" relationship between corresponding objects. "At least one of the following items (pieces)" or a similar expression thereof indicates any combination of these items, including a single item (piece) or any combination of a plurality of items (pieces). For example, at least one (piece) of a, b, or c may represent: a, b, c, "a and b", "a and c", "b and c", or "a, b, and c", where a, b, and c may be singular or plural.

To better understand embodiments of this application, the following first describes a system architecture in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a new radio (new radio, NR) system, a 5th generation (5th generation, 5G) communication system like a 3rd generation partner (3rd generation partner project, 3GPP) service-based network architecture (service-based architecture, SBA), or a communication system evolved after 5G like a 6th generation (6th generation, 6G) communication system.

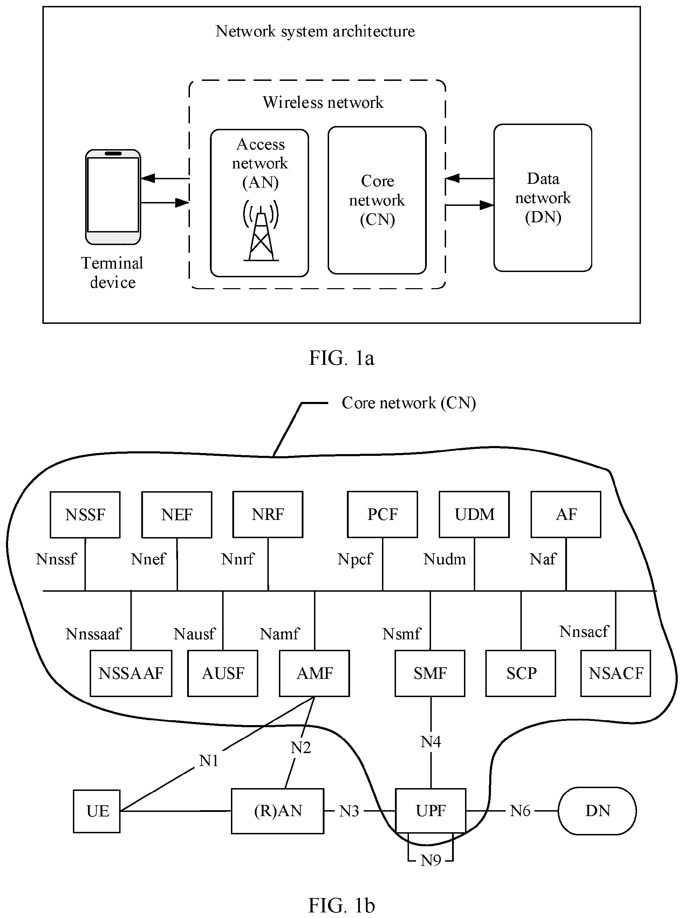

FIG. 1a is a diagram of a network system architecture according to an embodiment of this application. As shown in FIG. 1a, a terminal device may access a wireless network, to obtain a service of an external network (for example, a data network (data network, DN)) through the wireless network, or communicate with another device through the wireless network, for example, communicate with another terminal device. The wireless network includes a (radio) access network ((radio) access network, (R)AN) and a core network (core network, CN). The (R)AN (described as a RAN below) is configured to connect the terminal device to the wireless network, and the CN is configured to: manage the terminal device and provide a gateway for communicating with the DN. The following separately and specifically describes the terminal device, the RAN, the CN, and the DN in the system architecture in FIG. 1a.

### 1. Terminal device

The terminal device includes a device that provides voice and/or data connectivity for a user. For example, the terminal device is a device that has a wireless transceiver function, and may be deployed on land, where the deployment includes indoor, outdoor, handheld, wearable, or vehicle-mounted deployment; may be deployed on water (for example, on a ship); or may be deployed in the air (for example, on an airplane, a balloon, or a satellite). The terminal device may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in the industrial control, a UE unit, a UE station, a mobile station, a remote station, a remote terminal, a mobile device, a UE terminal, a wireless communication device, a UE proxy, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform).

### 2. RAN

The RAN may include one or more RAN devices (or access network devices). An interface between an access network device and a terminal device may be a Uu interface (or referred to as an air interface). Certainly, in communication evolved after 5G, names of these interfaces may remain unchanged, or may be replaced with other names. This is not limited in this application.

The access network device is a node or a device that connects the terminal device to the wireless network. The access network device includes, for example, but is not limited to, a next-generation NodeB (next-generation NodeB, gNB) in a 5G communication system, an evolved NodeB (evolved NodeB, eNB), a next-generation evolved NodeB (next-generation eNB, ng-eNB), a radio backhaul device, a radio network controller (radio network controller, RNC), a NodeB (NodeB, NB), a home base station ((home evolved NodeB, HeNB) or (home NodeB, HNB)), a baseband unit (baseBand unit, BBU), a transmission reception point (transmitting and receiving point, TRP), a transmission point (transmitting point, TP), a mobile switching center, or a device that functions as a base station in device-to-device (Device-to-Device, D2D), vehicle-to-everything (vehicle-to-everything, V2X), machine-to-machine (machine-to-machine, M2M) communication; or may include a central unit (centralized unit, CU) and a distributed unit (distributed unit, DU) in a cloud access network (cloud radio access network, C-RAN) system, a network device that is in a non-terrestrial network (non-terrestrial network, NTN) communication system and that may be deployed on a high-altitude platform or a satellite, or the like. This is not specifically limited in embodiments of this application.

### 3. CN

The CN may include one or more CN devices (which may be understood as network element devices or functional network elements (network function, NF)).

FIG. 1b is a diagram of a structure of a CN according to this application. The CN in FIG. 1b is a diagram of a CN in a 5G network architecture. The CN shown in FIG. 1b includes a plurality of CN devices: a network slice selection function (network slice selection function, NSSF), a network exposure function (network exposure function, NEF), a network repository function (network function repository function, NRF), a policy control function (policy control function, PCF), unified data management (unified data management, UDM), an application function (application function, AF), a network control function (network control function, NCF), a network slice-specific authentication and authorization function (network slice-specific authentication and authorization function, NSSAAF), an authentication server function (authentication server function, AUSF), an access and mobility management function (access and mobility management function, AMF), a session management function (session management function, SMF), a user plane function (user plane function, UPF), a service communication proxy (service communication proxy, SCP), and a network slice admission control function (Network Slice Admission Control Function, NSACF).

The AMF is a control plane function provided by an operator network, and is responsible for access control and mobility management for accessing the operator network by a terminal device, for example, including functions such as mobility status management, allocation of a temporary user identity, and user authentication and authorization.

The SMF is a control plane function provided by the operator network, and is configured to manage a protocol data unit (protocol data unit, PDU) session of the terminal device. The PDU session is a channel used to transmit a PDU, and the terminal device and the DN need to transmit the PDU to each other through the PDU session. The SMF is responsible for establishment, maintenance, deletion, and the like of the PDU session. The SMF includes functions related to a session, for example, session management (for example, session establishment, modification, and release, including tunnel maintenance between the UPF and the RAN), selection and control of the UPF, service and session continuity (service and session continuity, SSC) mode selection, and roaming.

The PCF is a control plane function provided by an operator, including a user subscription data management function, a policy control function, a charging policy control function, quality of service (quality of service, QoS) control, and the like, and is mainly configured to provide a PDU session policy for the SMF. The policy may include a charging-related policy, a QoS-related policy, an authorization-related policy, and the like.

The UPF is a gateway provided by the operator and a gateway for communication between the operator network and the DN. The UPF includes user plane-related functions such as data packet routing and transmission, packet detection, quality of service (quality of service, QoS) processing, uplink packet detection, and downlink data packet storage.

The UDM is mainly configured to: manage subscription data and authentication data of a user, and perform authentication credit processing, user identifier processing, access authorization, registration/mobility management, subscription management, short message service management, and the like. In some embodiments, the UDM may further include a unified data repository (unified data repository, UDR). Alternatively, in some other embodiments, a 3GPP SBA in a 5G system may further include a UDR. The UDR is configured to: store and retrieve a PCF policy, store and retrieve structured data for exposure, store user information requested by the application function, and the like.

The CN devices may also be referred to as network elements or functional network elements. In a 5G communication system, functional network elements may be names of the functional network elements shown in FIG. 1b. In a communication system (for example, a 6G communication system) evolved after 5G, functional network elements may still be the names of the functional network elements shown in FIG. 1b, or may have other names. For example, in the 5G communication system, the policy control network element may be the PCF. In the communication system (for example, the 6G communication system) evolved after 5G, the policy control function may still be the PCF, or may have another name. This is not limited in this application.

In FIG. 1b, Npcf, Nudm, Naf, Namf, Nsmf, N1, N2, N3, N4, and N6 are interface sequence numbers. For meanings of these interface serial numbers, refer to meanings defined in related standard protocols. This is not limited herein.

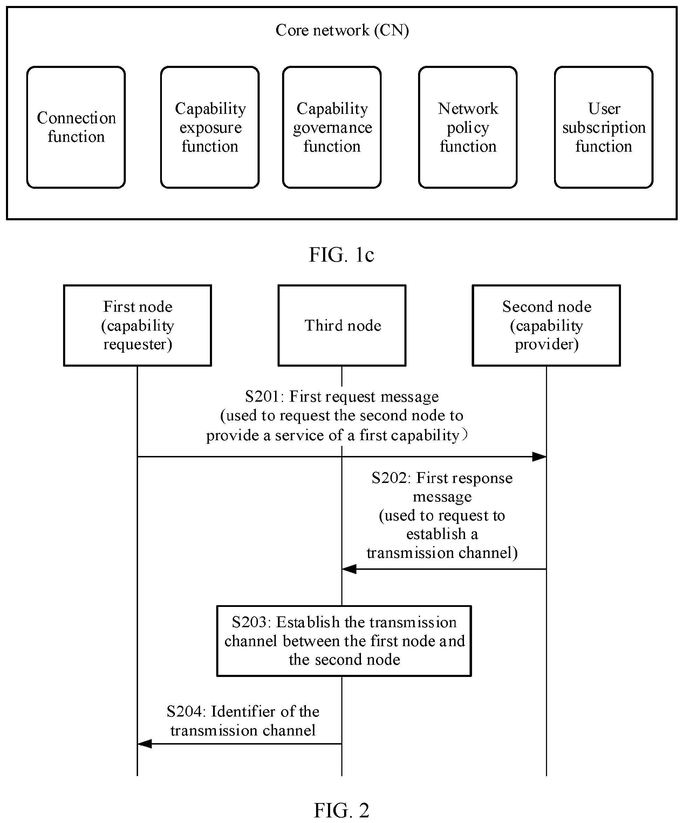

FIG. 1c is a diagram of another CN architecture according to this application. In FIG. 1c, CN devices included in the CN architecture include a connection function, a capability exposure function, a capability governance function, a network policy function, and a user subscription function.

The connection function network element is configured to provide a network connection capability for a terminal device, and connect the terminal device to a core network. The connection function network element includes functions such as connection management, mobility management, session management, security management, and user plane data forwarding. In other words, the terminal device may cooperate with a network via the connection function. A 5G system is used as an example, the connection function may be a network function like an AMF, an SMF, or a UPF.

The capability exposure function is configured to provide an application programming interface (application programing interface, API) of the network for an application service (namely, an AF) outside the core network. In other words, the AF may invoke the API provided by an NF via the capability exposure function, affecting network parameter configuration. In a possible implementation, the AF may invoke, via the capability exposure function, a capability provided by another node (for example, the terminal device, an access network device, the NF, or another AF) in the network, or may provide a capability for another node (for example, the terminal device, an access network device, the NF, or another AF) in the network via the capability exposure function.

The capability governance function is used to manage and control the capability in the network. For example, the capability governance function may process processes such as capability registration, admission, discovery, application, and authorization from the terminal device, the access network device, the AF, or the NF. The NF is an internal network element function in the CN architecture. For example, the NF may be the AMF, the SMF, the UPF, a PCF, or a UDM in the 5G system. It should be noted that, in the following description of this application, only capability management and control of all capability types corresponding to one capability governance function is used as an example for description, and this cannot be considered as a specific limitation on this application. In other words, in a possible implementation, different capability types may correspond to different capability governance functions. For example, a capability type of a computing capability corresponds to a computing capability governance function, a capability type of a data capability corresponds to a data capability governance function, and a capability type of a sensing capability corresponds to a sensing capability governance function.

The network policy function is used to provide execution policies for another network function under various conditions. The network policy function may affect parameters such as access scheduling, quality of service (quality of service, QoS) coordination, and charging in a service process. In a possible implementation, the execution policy also includes whether capability registration, discovery, application, authorization, invocation, charging, and the like are allowed. The 5G system is used as an example, and the network policy function may be a network function like the PCF.

The user subscription function is configured to provide user subscription data for another network function, to obtain a service parameter, a security parameter, and the like that are subscribed to by a user. In a possible implementation, the user subscription data includes information about whether capability registration, discovery, application, authorization, invocation, charging, and the like are allowed. An operator may add, delete, or modify the subscription data via a business support system (business support system, BSS) in a card and number issuing phase or a subsequent phase.

It should be noted that the capability governance function may be integrated into the 5G network architecture shown in FIG. 1b. In a possible implementation, the capability governance function may be used as a newly added logical network element, or may be integrated into an existing network function in FIG. 1b as a logical function. For example, the capability governance function may be integrated into the AMF and the SMF. A capability (for example, a first capability in the following) mentioned in this application includes but is not limited to one or more of a computing capability (for example, a federated learning capability, an AI computing capability, or a basic computing capability resource), a data capability (including but not limited to a data storage capability, a data collection capability, a data analysis capability, and a data processing resource), or a sensing capability (including but not limited to a sensing signal sending capability, a sensing signal receiving capability, or a sensing signal processing capability). In other words, the capability mentioned in this application may also include another network capability in addition to the foregoing capabilities. The capability (including the first capability) mentioned in this application is a network capability (which may also be understood as a resource) that can be scheduled and used by another node (a node other than a node having the capability). For example, a node 1 has the AI computing capability, the node 1 may schedule and use the AI computing capability to perform service processing, and a node 2 may also schedule and use the AI computing capability of the node 1 to perform service processing.

It should be understood that the capability governance function in this application is merely an example name, and should not be considered as a specific limitation thereto. In other words, the capability governance function may have another name in another technical solution other than this application, or may be another communication device having a same function.

It needs to be stated as follows. 1. The CN structure shown in FIG. 1c is merely for ease of understanding of the CN, and only an example in which each functional network element is separately deployed in the CN is used. In some possible CN structures, functional network elements may be integrated and combined for deployment. For example, the capability governance function and the capability exposure function in FIG. 1c are integrated into a same functional network element, or the capability exposure function and the connection function in FIG. 1c are integrated into a same functional network element. This is not specifically limited in this application. 2. A core network mentioned below in this application may be a functional network element in the core network, or may be integration of several functional network elements in the core network, or may be integration of all functional network elements in the core network. The core network may be the core network in the 5G communication system shown in FIG. 1b, or may be the core network shown in FIG. 1c, or may be another possible communication system (for example, a core network in an LTE communication system or a communication system evolved after 5G). 3. The foregoing network element or functions may be network elements in a hardware device, may be software functions run on dedicated hardware, or may be instantiated virtualization functions on a platform (for example, a cloud platform). Optionally, the network element or function may be implemented by one device, or may be jointly implemented by a plurality of devices, or may be a functional module in one device. This is not specifically limited in embodiments of this application.

### 4. DN

The DN, also be referred to as a packet data network (packet data network, PDN), is a network outside the operator network. The operator network may access a plurality of DNs. Application servers corresponding to a plurality of services may be deployed in the DN, to provide a plurality of possible services for a terminal device.

Generally, a capability invocation mode between devices in a communication network architecture is fixed, and specifically includes: The terminal device can only serve as a capability invoker to invoke a capability of a core network device; and an AF can only serve as a capability invoker to invoke a capability of the core network device. However, with continuous development of technologies such as big data and artificial intelligence (artificial intelligence, AI), the fixed capability invocation mode cannot meet user and industry requirements.

This application provides a capability invocation method, so that devices in a network architecture can invoke capabilities of each other, to meet the user and industry requirements. The following further describes the capability invocation method and a communication apparatus provided in this application with reference to the accompanying drawings.

FIG. 2 is a schematic flowchart of a capability invocation method according to an embodiment of this application. As shown in FIG. 2, the capability invocation method includes the following S201 to S204. The method shown in FIG. 2 may be executed by a first node (a capability requester), a second node (a capability provider), and a third node, or the method shown in FIG. 2 may be executed by a chip of the first node, a chip of the second node, and a chip of the third node. FIG. 2 is described by using an example in which the first node, the second node, and the third node execute the method.

S201: The first node sends a first request message to the second node. The first request message is used to request the second node to provide a service of a first capability for the first node. The first capability is a network capability (or a resource) that can be scheduled and used.

A type of the first node is one of the following types: a terminal device, an access network device, an AF, or an NF. A type of the second node is one of the following types: a terminal device, an access network device, an AF, or an NF. In other words, in a communication architecture mentioned in this application, various types of nodes invoke capabilities of each other. In the communication architecture, each node may not only serve as the capability provider, but also serve as a capability invoker (or understood as the capability requester). For example, in one case, a terminal device 1 may request to invoke a capability 1 of the terminal device 2, the AF, or the NF based on a service requirement. In another case, the terminal device 1 may also provide a service of a capability 2 for the terminal device 2, the AF, or the NF.

In a possible implementation, when the first node requests the second node to provide the service of the first capability for the first node, the first node may further describe an identity of the first node and a feature of the first capability. In other words, the first request message includes information about the first node and first information of the first capability. The information about the first node includes an identifier of the first node or the type of the first node, and the first information of the first capability includes one or more of the following information: a type of the first capability, a name of the first capability, a version of the first capability, an invocation parameter of the first capability, an interface address of the first capability, and a network identifier corresponding to the first capability.

It should be noted that the type of the first capability is used to describe a type to which the first capability belongs. For example, the type of the first capability is one or more of capability types such as a computing capability, a data capability, or a sensing capability. The name of the first capability may be understood as a detailed description of the first capability in a category to which the first capability belongs. For example, the name of the first capability may be a computing capability used for federated learning. The invocation parameter of the first capability includes a service feature parameter that describes the first capability, for example, a delay requirement parameter of the first capability. The interface address of the first capability is an invocation address corresponding to the first capability provided by the second node. The network identifier corresponding to the first capability indicates a unique interface address of the first capability, for example, a DNN or an interface address for discovering the first capability in a specific network (for example, a core network).

It should be understood that the NF may directly perform capability exchange with another NF in the core network. However, the terminal device needs to perform capability exchange with another device in the core network via a connection function, and the AF needs to perform capability exchange with another device in the core network via a capability exposure function. In other words, when the type of the first node is the NF, and the type of the second node is also the NF, the first node may directly send the first request message to the second node. When the type of the first node is the terminal device or the AF, the first node may send the first request message to the second node via the third node. The third node is configured to connect the first node to the core network. For example, when the first node is the terminal device, the third node is the connection function. When the first node is the AF, the third node is the capability exposure function.

In a possible implementation, after receiving the first request message from the first node, the third node may further send an authentication request to a fifth node (a network function configured to store user subscription information and/or policy information), to request the fifth node to authenticate whether the first node has permission to invoke the first capability. If the fifth node authenticates that the first node does not have the permission to invoke the first capability, the third node sends, to the first node, a message indicating capability invocation failure. If the fifth node authenticates that the first node has the permission to invoke the first capability, the third node sends the first request message to the second node, to request the second node to provide the service of the first capability for the first node.

In other words, in this possible implementation, the first node sends the first request message to the third node. The third node sends the authentication request message to the fifth node based on the first request message. The authentication request message is used to authenticate the permission of the first node to invoke the first capability. The third node receives an authentication response message from the fifth node. The authentication response message indicates whether the first node has the permission to invoke the first capability. The third node sends the first request message to the second node when the authentication response message indicates that the first node has the permission to invoke the first capability.

In a possible implementation, the authentication request message includes information about the capability requester (namely, the first node) and second information of the first capability. The information about the first node includes the type of the first node and/or the identifier of the first node, and the second information of the first capability includes one or more of the type of the first capability, the name of the first capability, the version of the first capability, or the invocation parameter of the first capability.

S202: The second node sends a first response message to the third node, where the first response message is used to request to establish a transmission channel between the first node and the second node. The transmission channel is used to transmit a capability invocation message corresponding to the first capability, and the third node is a network device that establishes the transmission channel.

In other words, after receiving the first request, from the first node, for invoking the first capability, the second node requests the third node to establish the transmission channel between the first node and the second node. The first response message includes but is not limited to one or more of the following information: the capability name of the first capability, the capability version of the first capability, the invocation parameter of the first capability, token information, information about the second node, or the information about the first node. It should be noted that when the type of the first node or the type of the second node is the terminal device, the third node includes the connection function. When the type of the first node or the type of the second node is the AF, the third node includes the capability exposure function. When both the type of the first node and the type of the second node are the NFs, the third node may be the first node or the second node, or may be another network element function other than the first node or the second node.

The transmission channel includes a transmission link used for signaling exchange, and/or a user plane tunnel used for user plane data exchange. The following should be understood: 1. The transmission link for signaling exchange is usually a channel for message (for example, a request message and a response message) exchange, and a data packet of a transmitted message is not large. In other words, for example, the transmission link for signaling exchange may provide a transmission channel for a control message when the first node (a capability service requesting node) invokes the first capability of the second node (a capability service providing node), to transfer a necessary control information element (including an instruction for starting or ending a capability service, capability duration, and the like). 2. The user plane tunnel for user plane data exchange is usually a data transmission channel used when the service of the first capability is provided, and a transmitted data packet is large. For example, when the service of the first capability is a data governance service, the first node (the capability service requesting node) may need to obtain a large amount of data from the second node (the capability service providing node). In this case, the two parties may establish a user plane channel to complete data transmission, that is, establish a user plane communication channel via the third node (for example, a control plane network element).

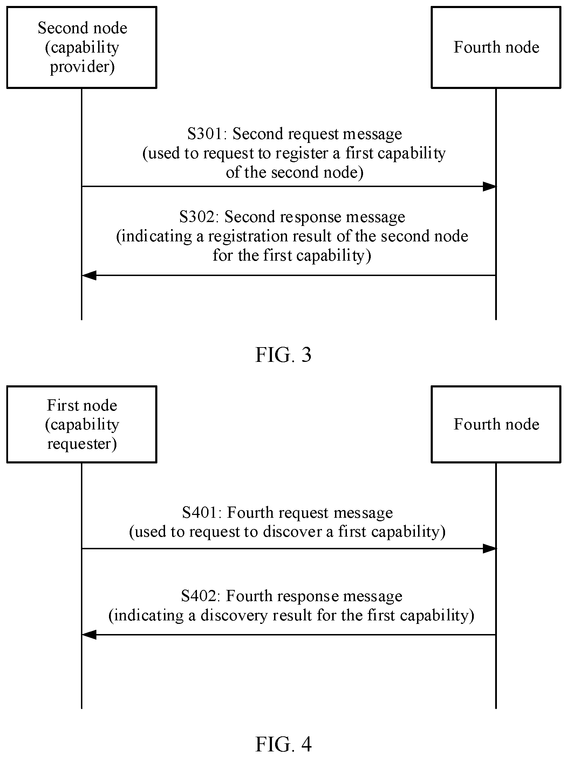

In a possible implementation, if the first request message includes token (also referred to as token) information of the second node, before the second node sends the first response message to the third node, the second node may verify the token information. Verified content includes but is not limited to verifying whether the token information is authentic (that is, whether the token information is a token delivered by the second node), verifying whether the token information expires (that is, detecting whether the token information includes a valid time and whether the token information has been out of the valid time of the token information), and the like. When the second node successfully verifies the token information (that is, the token information is authentic and valid), the second node sends the first response message to the third node. It should be noted that, for a manner of obtaining the token information, refer to related descriptions in FIG. 4. Details are not described herein again.

S203: The third node establishes the transmission channel based on the first response message.

After receiving the first response message from the second node, the third node establishes the transmission channel between the first node and the second node.

The following uses an example in which the third node is the connection function and the first node is the terminal device 1 to describe establishment of the transmission link for signaling exchange and establishment of the user plane tunnel for user plane data exchange.

Example 1: The transmission channel is the transmission link for signaling exchange, and the connection function allocates a capability connection identifier (also referred to as a capability connection ID) to the terminal device 1, and updates a user context corresponding to the terminal device 1. If the connection function is an access management function or a mobility management function (for example, an AMF in a 5G network), the connection function may update capability service usage information of a user in an access management context or a mobility management context of the user.

Example 2: The transmission channel is the user plane tunnel for user plane data exchange, and the connection function establishes the user plane tunnel between the first node and the second node. For example, an SMF establishes a link between a UPF and the AF (namely, the second node) for the terminal device 1.

S204: The third node sends an identifier of the transmission channel to the first node.

In other words, when the transmission channel includes the transmission link for signaling exchange, the third node feeds back the identifier (or referred to as a capability connection identifier or a capability connection ID) of the transmission link to the first node. When the transmission channel includes the user plane tunnel, the third node feeds back information (for example, a user plane tunnel identifier) about the user plane tunnel to the first node.

In an embodiment, the first node sends, to the third node, the capability invocation message used to invoke the first capability. The capability invocation message includes the identifier of the transmission channel. Further, the third node sends the capability invocation message to the second node based on the identifier of the transmission channel through the transmission channel.

For example, the identifier, of the transmission channel, sent by the third node to the first node is a capability 100. In this case, the capability invocation message sent by the first node to the third node carries the identifier (namely, the capability 100) of the transmission channel, so that after receiving the capability invocation message, the third node forwards the capability invocation message to a capability providing node (namely, the second node) corresponding to the identifier (namely, the capability 100) of the transmission channel.

It can be learned that, by implementing the capability invocation method described in FIG. 2 in this application, various devices in a communication system may serve as the capability requester or the capability provider, so that a capability invocation mode of the communication system is flexible, to meet user and industry requirements.

In this application, each type of node may serve as a capability provider of another node. The following describes how each type of device in a communication network registers a capability of the device. FIG. 3 is a schematic flowchart of a capability registration method according to an embodiment of this application. As shown in FIG. 3, the capability registration method includes S301 and S302. The method shown in FIG. 3 may be performed by a second node (a capability provider) and a fourth node (for example, a capability governance function), or the method shown in FIG. 3 may be performed by a chip of the second node and a chip of the fourth node. FIG. 3 is described by using an example in which the second node and the fourth node execute the method.

S301: The fourth node receives a second request message of the second node, where the second request message is used to register a first capability of the second node. The first capability is a network capability (or a resource) that can be scheduled and used.

The fourth node is a network device configured to manage a capability. For example, the fourth node may be the capability governance function in FIG. 1c. A type of the second node is one of the following types: a terminal device, an access network device, an AF, or an NF.

In a possible implementation, when the second node requests to register the first capability from the fourth node, the second node may further describe information about the second node and a feature of the first capability for which registration is requested. In other words, the second request message includes the information about the second node and first information of the first capability. The information about the second node includes an identifier of the second node or the type of the second node, and the first information of the first capability includes one or more of the following information: a type of the first capability, a name of the first capability, a version of the first capability, an invocation parameter of the first capability, an interface address of the first capability, a network identifier corresponding to the first capability, and a security policy of the first capability. The security policy of the first capability includes but is not limited to a discovery policy of discovering a first capability of a first node, an invocation policy of invoking the first capability of the first node, indication information indicating whether to perform security negotiation when the first capability of the first node is invoked, an application policy of applying for invoking the first capability, and the like.

It should be understood that the NF may directly perform capability exchange with another NF in a core network. However, the terminal device needs to perform capability exchange with another device in the core network via a connection function, and the AF needs to perform capability exchange with another device in the core network via a capability exposure function. In other words, when the type of the second node is the NF, the second node may directly send the second request message to the fourth node. When the type of the second node is the terminal device or the AF, the second node sends the second request message to the fourth node via a sixth node. The sixth node is configured to connect the second node to the core network. For example, when the second node is the terminal device, the sixth node is the connection function. When the second node is the AF, the sixth node is the capability exposure function.

S302: The fourth node sends a second response message to the second node, where the second response message indicates a registration result of the second node for the first capability.

When the second node is the NF, the fourth node directly sends the second response message to the second node. When the type of the second node is the terminal device or the AF, the fourth node sends the second response message to the second node via the sixth node. The sixth node is configured to connect the second node to the core network.

In a possible implementation, before the fourth node sends the second response message to the second node, the fourth node may further send a third request message to a fifth node (a network device configured to manage policy information and/or subscription information). The third request message is used to request to authenticate permission of the second node to register the first capability. The third request message includes the information about the second node and second information of the first capability, and the second information of the first capability includes at least one or more of the following: the type of the first capability, the name of the first capability, or the version of the first capability. After performing query and authentication on the permission of the second node to register the first capability, the fifth node sends a third response message to the fourth node. The third response message indicates whether the second node is allowed to register the first capability. Further, the fourth node sends the second response message to the second node based on the third response message.

In other words, in this possible implementation, after receiving the second request message from the second node, the fourth node requests the fifth node (a network function configured to store user subscription information and/or policy information) to authenticate whether the second node has the permission to register the first capability. Further, the fourth node sends the second response message to the second node based on an authentication result of the fifth node. For example, if the fifth node authenticates that the second node does not have the permission to register the first capability, the fourth node sends, to the second node, a second response message indicating registration failure. If the fifth node authenticates that the second node has the permission to register the first capability, the fourth node sends, to the second node, a second response message indicating registration success.

In a possible implementation, the fourth node further sends the second response message to the second node based on local configuration information. The local configuration information includes indication information indicating whether to accept registration of the first capability by the second node. If the local configuration information includes indication information indicating that the registration of the first capability by the second node is accepted, the fourth node sends the second response message to the second node. The second response message indicates that the registration result of registering the first capability by the second node is the registration success. If the local configuration information includes indication information indicating that the registration of the first capability by the second node is not accepted, the fourth node sends the second response message to the second node. The second response message indicates that the registration result of registering the first capability by the second node is the registration failure.

In a possible implementation, the fourth node may send the second response message to the second node based on the local configuration information and the third response message. In other words, after receiving the second request message, the fourth node may request the fifth node to authenticate whether the second node has the permission to register the first capability, and send the second response message to the second node based on the local configuration information. In this case, only when the third response message indicates that the second node is allowed to register the first capability (that is, the second node has the permission to register the first capability), and the local configuration information includes the indication information indicating that the registration of the first capability by the second node is accepted, the second response message indicates to the second node that the registration of the first capability by the second node succeeds. Conversely, the second response message indicates that the registration of the first capability by the second node fails.

In a possible implementation, when the second response message indicates that the registration result of registering the first capability by the second node is the registration failure, the second response message may further include a cause value (or referred to as indication information) indicating a registration failure cause. For example, the failure cause value indicates a failure type. A failure type 1 indicates that the local configuration information does not allow the registration of the capability, and a failure type 2 indicates that there is no permission to register the capability. In this case, if the second response message indicates that the registration fails, and the second response message further carries a cause value (or referred to as indication information) of the failure type 1, the second response message indicates that the current registration fails because the local configuration information does not allow the second node to register the first capability.

In a possible implementation, when the second response message indicates that the registration result of registering the first capability by the second node is the registration success, the fourth node records the first capability of the second node. For example, when a terminal device 1 successfully registers a federated learning capability, the fourth node records the federated learning capability of the terminal device 1 in a capability information table shown in Table 1.

**Table 1**

| Type of the second node (capability provider) | Identifier of the second node | Capability type | Capability name |
|---|---|---|---|
| Terminal device | Terminal device 1 | Computing capability | Federated learning capability |
| Terminal device | Identifier, address, device information, and the like | Sensing capability | Channel quality sensing capability |
| AF | Identifier, address, device information, and the like | Computing capability | Federated learning capability |
| NF | Identifier, address, device information, and the like | Data capability | Data governance capability |

It can be learned that, according to the capability registration method described in FIG. 3, each type of device may register a capability of the device on a network side, so that the capability can be subsequently provided for another node in a communication system.

This application further provides a capability discovery method about how does another node in a communication system discover a first capability of a second node after the second node registers the first capability or how does a first node know whether another node in a communication system can provide a first capability before the first node invokes the first capability. Based on this, this application further provides a capability discovery method. FIG. 4 is a schematic flowchart of a capability registration method according to an embodiment of this application. As shown in FIG. 4, the capability registration method includes S401 and S402. The method shown in FIG. 4 may be performed by a first node and a fourth node, or the method shown in FIG. 4 may be performed by a chip of the first node and a chip of the fourth node. FIG. 4 is described by using an example in which the first node and the fourth node execute the method.

S401: The first node sends a fourth request message to the fourth node, where the fourth request message is used to request to discover a first capability, and the first capability is a network capability (or a resource) that can be scheduled and used.

It may be understood that, when the first node requires the first capability, the first node sends the fourth request message to the fourth node, to request to know whether another node (a node other than the first node) in a communication system can provide the first capability. The fourth node is a capability management function, for example, the capability governance function in FIG. 1c. A type of the first node is one of the following types: a terminal device, an access network device, an AF, or an NF.

In a possible implementation, when the first node requests to discover the first capability, the first node may further describe an identity of the first node and a feature of the first capability. In other words, the fourth request message includes information about the first node and third information of the first capability. The information about the first node includes an identifier of the first node or the type of the first node, and the third information of the first capability includes one or more of the following information: a type of a node that provides the first capability (that is, an expected type of the node that provides the first capability), a type of the first capability, a name of the first capability, and a version of the first capability. It should be understood that, when the fourth request message includes the type of the node that provides the first capability, the fourth node may preferentially consider the node of the expected type when subsequently querying a node that can provide the first capability for the first node, or when determining a node that can provide the first capability for the first node.

It should be understood that the NF may directly perform capability exchange with another NF in a core network. However, the terminal device needs to perform capability exchange with another device in the core network via a connection function, and the AF needs to perform capability exchange with another device in the core network via a capability exposure function. In other words, when the type of the first node is the NF, the first node may directly send the fourth request message to the fourth node. When the type of the first node is the terminal device or the AF, the first node sends the fourth request message to the fourth node via a third node. The third node is configured to connect the first node to the core network. For example, when the first node is the terminal device, the third node is the connection function. When the first node is the AF, the third node is the capability exposure function.

S402: The fourth node sends a fourth response message to the first node, where the fourth response message indicates a discovery result for the first capability.

When the first node is the NF, the fourth node directly sends the fourth response message to the first node. When the first node is the terminal device or the AF, the fourth node sends the fourth response message to the first node via the third node. The third node is configured to connect the first node to the core network.

It should be noted that the fourth request message may be a subscription message. In other words, the fourth request message sent by the first node to the fourth node is not limited to a service of immediately obtaining the first capability, but provides a subscription request. For example, when the first node sends the fourth request message to the fourth node to request to discover the first capability provided by the another node, the fourth node finds, based on the fourth request message, that no node can provide the first capability currently. In this case, the fourth node may send the fourth response message to the first node when a node (for example, a second node) registers the first capability subsequently, to indicate the discovery result for the first capability.

In a possible implementation, before the fourth node sends the fourth response message to the first node, the fourth node may further send a fifth request message to a fifth node (configured to manage policy information and/or subscription information). The fifth request message is used to authenticate permission of the first node to discover the first capability. The fifth request message includes the information about the first node and the third information of the first capability, and the third information of the first capability includes at least one or more of the following: a type of a node that provides the first capability, a type of the first capability, a name of the first capability, or a version of the first capability. After performing query and authentication on the permission of the first node to discover the first capability, the fifth node sends a fifth response message to the fourth node. The fifth response message indicates whether the first node is allowed to discover the first capability. Further, the fourth node sends the fourth response message to the second node based on the fifth response message.

In other words, in this possible implementation, after receiving the fourth request message from the first node, the fourth node requests the fifth node (a network function configured to store user subscription information and/or policy information) to authenticate whether the first node has the permission to discover the first capability. Further, the fourth node sends the fourth response message to the first node based on an authentication result of the fifth node. For example, if the fifth node authenticates that the first node does not have the permission to discover the first capability, the fourth node sends, to the first node, a fourth response message indicating capability discovery failure. If the fifth node authenticates that the first node has the permission to discover the first capability, the fourth node sends, to the first node, a fourth response message indicating capability discovery success.

In a possible implementation, the fourth node further sends the fourth response message to the first node based on local configuration information. The local configuration information includes indication information indicating whether to accept discovery of the first capability by the first node. If the local configuration information includes indication information indicating that the discovery of the first capability by the first node is accepted, the fourth node sends the fourth response message to the first node. The fourth response message indicates that the discovery of the first capability by the first node succeeds. If the local configuration information includes indication information indicating that the discovery of the first capability by the first node is not accepted, the fourth node sends the fourth response message to the first node. The fourth response message indicates that the discovery of the first capability by the first node fails.

In a possible implementation, the fourth node may send the fourth response message to the first node based on the local configuration information and the fifth response message. In other words, after receiving the fourth request message, the fourth node may request the fifth node to authenticate whether the first node has the permission to discover the first capability, and send the fourth response message to the first node based on the local configuration information. In this case, only when the fifth response message indicates that the first node is allowed to register and discover the first capability (that is, the first node has the permission to discover the first capability), and the local configuration information includes the indication information indicating that the discovery of the first capability by the first node is accepted, the fourth response message indicates to the first node that the discovery of the first capability by the first node succeeds. Conversely, the fourth response message indicates that the discovery of the first capability by the first node fails.

In a possible implementation, when the fourth response message indicates that the discovery of the first capability by the first node fails, the fourth response message may further include a cause value (or referred to as indication information) indicating a discovery failure cause. For example, the failure cause value indicates a failure type. A failure type 1 indicates that the local configuration information does not allow the discovery of the capability, and a failure type 2 indicates that there is no permission to discover the capability. In this case, if the fourth response message indicates that the registration fails, and the fourth response message further carries a cause value (or referred to as indication information) of the failure type 1, the fourth response message indicates that the current registration fails because the local configuration information does not allow the first node to discover the first capability.

In a possible implementation, when the fourth response message indicates that the discovery of the first capability by the first node succeeds, the fourth response message may further include a capability list corresponding to the first capability. The capability list of the first capability includes first information of the first capability, and the first information of the first capability includes one or more of the following information: the type of the first capability, the name of the first capability, the version of the first capability, an invocation parameter of the first capability, an interface address of the first capability, or a network identifier corresponding to the first capability. Alternatively, the capability list of the first capability includes a plurality of nodes that each can provide the first capability and first information of the first capability corresponding to each node.

In other words, in this possible implementation, when the fourth response message indicates that the discovery of the first capability by the first node succeeds, the fourth response message indicates, to the first node, feature information (for example, a version of the first capability that can be provided) of the first capability that can be provided by the another node in the communication system. Alternatively, the fourth response message may further indicate, to the first node, a node that can provide the first capability for the first node in the communication system and feature information of the first capability that can be provided by each node.

In a possible implementation, when the fourth response message indicates that the discovery of the first capability by the first node succeeds, the fourth response message may further indicate information about the second node that provides the capability for the first node, and the first information of the first capability provided by the second node. In other words, when determining that the first node can discover the first capability, the fourth node determines the second node that provides a service of the first capability for the first node. Further, the fourth node sends a sixth request message (or referred to as a query request message) to the second node. The sixth request message is used to query whether the second node can provide the service of the first capability for the first node. The second node sends a sixth response message to the fourth node. The sixth response message indicates whether the service of the first capability can be provided for the first node. When the sixth response message indicates that the second node can provide the service of the first capability for the first node, the fourth response message may further indicate the information about the second node and the first information of the first capability corresponding to the second node.

For example, when the first node can discover the first capability, the fourth node finds, from a maintained capability information table through querying, nodes that each have registered the first capability, including a node 1 and a node 2. The fourth node sends the sixth request message to the node 1, requesting the node 1 to provide the first capability for the first node. Further, the node 1 may determine, based on a status of the node 1 (a load status of a processor, an ongoing service requirement, a to-be-performed service requirement, or the like), whether the node 1 can provide the first capability for the first node. When determining that the node 1 can provide the service of the first capability for the first node, the node 1 sends the sixth response message (or referred to as a query response message) to the fourth node. The sixth response message indicates that the node 1 can provide the service of the first capability for the first node. Further, the fourth node sends, to the first node, a feature (namely, the first information of the first capability) of the first capability provided by the node 1, so that the first node can subsequently request to invoke the first capability of the node 1 based on the feature of the first capability provided by the node 1.

In a possible implementation, when the second node agrees to (or understood as that the second node can) provide the service of the first capability for the first node, the sixth response message sent by the second node to the fourth node further includes token information corresponding to the second node. Further, the fourth response message sent by the fourth node to the first node may further include the token information. The token information is used by the second node to verify the identity of the first node when the first node subsequently requests to invoke the first capability of the second node. The token information may include a key, valid time, or the like of the second node.

The following describes a manner in which the fourth node determines the second node (a node that provides the service of the first capability for the first node) from the plurality of nodes that each can provide the first capability.

Manner 1: The fourth node obtains requirement information of the first node for invoking the first capability, and determines the second node based on the requirement information.

The requirement information includes one or more of the following information: a service requirement of the first node for the first capability, a location correlation requirement between the first node and the second node that provides the first capability, the load status of the second node, or a priority of the second node selected by the first node to provide the first capability.

It may be understood that the service requirement of the first node for the first capability includes but is not limited to a transmission delay requirement during invocation of the first capability, a packet loss rate requirement during invocation of the first capability, a QoS requirement during invocation of the first capability, and the like. The location correlation requirement between the first node and the second node that provides the first capability includes but is not limited to a requirement for a data transmission distance between the first node and the second node (namely, the node that provides the first capability) (for example, the data transmission distance is required to be minimized), and a requirement for a quantity of intermediate nodes between the first node and the second node (for example, the quantity of intermediate nodes is required to be minimized). The load status of the second node includes but is not limited to a requirement for a quantity of nodes served by the second node when the second node serves as a capability provider (for example, a quantity of capability requesting nodes that the second node is required to serve at the same time is less than a threshold, to ensure processing performance of the second node), a load status of a processor of the second node, and the like. The priority of the second node selected by the first node to provide the first capability is a priority of a node type of the second node expected by the first node to provide the first capability. For example, priorities of second nodes required to provide a capability for the first node are sequentially: the NF, the access network device, the AF, and the terminal device in descending order.

It should be noted that a manner of obtaining, by the fourth node, the requirement information of the first node for invoking the first capability includes but is not limited to the following. 1. When requesting to discover the first capability, the first node actively describes, to the fourth node, the requirement for invoking the first capability. For example, the fourth request message further carries the requirement information of the first node for invoking the first capability. 2. After the first node requests to discover the first capability, the fourth node sends a requirement information obtaining request to the first node, to obtain the requirement of the first node for invoking the first capability. 3. The fourth node obtains, through analysis and based on a service feature of the first node, the requirement information of the first node for invoking the first capability. 4. The fourth node obtains the requirement information of the first node for invoking the first capability from another node (a node that is communicatively connected to the first node).

Manner 2: The fourth node does not obtain requirement information of the first node for invoking the first capability, and determines the second node according to a preset rule.

The preset rule may be adjusted based on an application scenario. This is not specifically limited in this application. For example, the preset rule is specified in a protocol, or may be preconfigured by an operator. The preset rule includes but is not limited to a transmission resource saving rule (for example, requiring a quantity of intermediate nodes between a capability requester and a capability provider to be minimized), a service optimization rule (for example, ensuring a distance between the capability requester and the capability provider to be short, to reduce a transmission delay), and the like.

For example, the fourth node has a function of obtaining location information of each node. When the node 1 and the node 2 can each provide the first capability, the fourth node determines a distance 1 between the node 1 and the first node to be less than a distance 2 between the node 2 and the first node. To improve quality of service of providing the first capability for the first node, the fourth node determines the node 1 as the second node.

Manner 3: The fourth node obtains prior information of the first node, and determines the second node based on the prior information.

The prior information includes but is not limited to node type statistical information of a node that provides a capability for the first node before the first node sends the fourth request message, service requirement statistical information of the first node, and the like.

For example, the fourth node determines, based on the prior information of the first node, that the first node usually obtains a capability from an NF-type node. If the node 1 and the node 2 can each provide the first capability for the first node, a type of the node 1 is the NF, and a type of the node 2 is the AF, the fourth node may determine, based on the prior information, the node 1 as the second node that provides the first capability for the first node.

According to the capability discovery method described in FIG. 4, the capability requester can discover, based on a requirement of the capability requester, the capability that can be provided by the another node in the communication system, so that the capability requester can flexibly invoke capabilities provided by various nodes to meet the requirement of the capability requester.

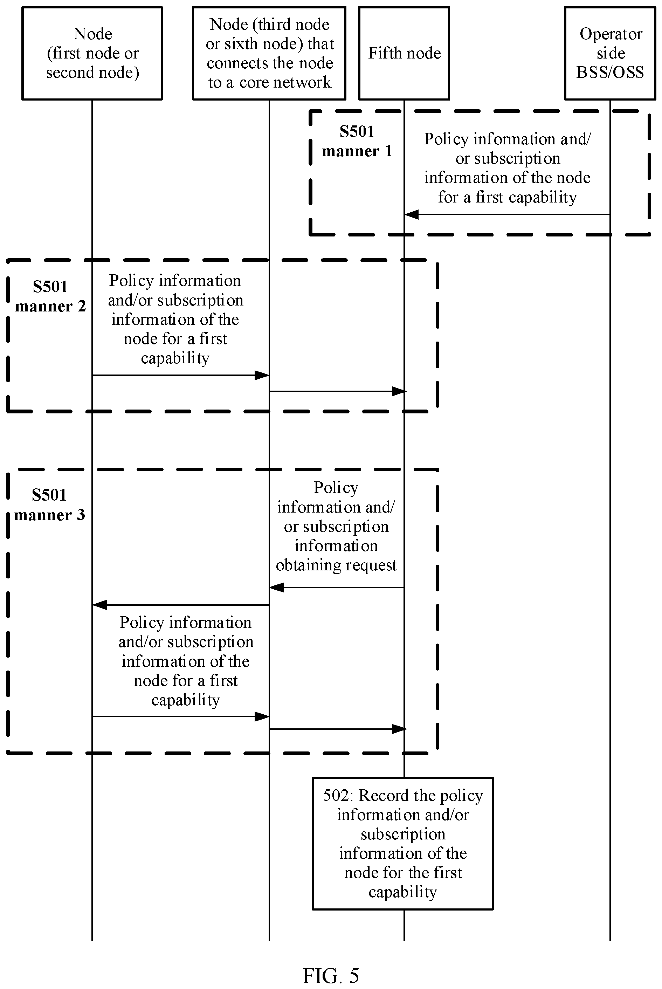

The following describes, according to the methods described in FIG. 2 to FIG. 4, a process of maintaining authorization information of a node in this application. FIG. 5 is a schematic flowchart of an authorization information maintenance method according to an embodiment of this application. As shown in FIG. 5, the authorization information maintenance method includes S501 and S502. The method shown in FIG. 5 may be performed by a fifth node (a network function configured to store user subscription information and/or policy information), or the method shown in FIG. 5 may be executed by a chip of the fifth node. FIG. 5 is described by using an example in which the fifth node executes the method.

S501: The fifth node obtains policy information and/or subscription information of a node for a first capability. The first capability is a network capability (or a resource) that can be scheduled.

In other words, the fifth node obtains policy information and/or subscription information of nodes (including the foregoing first node and second node) for registering, discovering, and invoking the first capability. A type of the node is one of the following types: a terminal device, an access network device, an AF, or an NF.

The following describes a manner in which the fifth node obtains the policy information and/or subscription information of the node for the first capability.

Manner 1: The fifth node obtains the policy information and/or subscription information of the node for the first capability from an operator side.

Specifically, the fifth node may obtain the policy information and/or subscription information of the node for the first capability from a basic service set (Basic Service Set, BSS) or an operation support system (Operation Support System, OSS) of an operator.

For example, the type of the node is the terminal device. When the terminal device is registered on the operator side, subscription of the terminal device records that the terminal device can provide a federated learning capability service, have an image recognition capability, have a data processing capability, and the like.

Manner 2: When the node is the terminal device or the AF, the node may send the policy information and/or subscription information for the first capability to the fifth node via a node (for example, the foregoing third node or sixth node) that connects the node to a core network.

For example, the type of the node is the terminal device, and the terminal device may subscribe to, add, or modify a capability service through an operation on an interface. When the terminal device has a capability of providing federated learning, the terminal device may provide an AI model training capability for another node. In this case, a user may choose, on the operation interface of the terminal device, to add the federated learning capability (namely, newly added subscription information) for the terminal device. Further, the terminal device sends the newly added subscription information to a connection function via the access network device, so that the connection function sends the newly added subscription information to the fifth node. It should be noted that the newly added subscription information may be sent via a non-access stratum (Non-Access Stratum, NAS) message, or may be sent to the connection function by using a user plane data packet (for example, sent by the terminal to an SMF via a UPF). This is not specifically limited in this application.

Manner 3: When the node is the terminal device or the AF, the fifth node may send a policy information and/or subscription information obtaining request to the fifth node via a node (for example, the foregoing third node or sixth node) that connects the node to a core network, to obtain the policy information and/or subscription information for the first capability. Further, the node may send the policy information and/or subscription information for the first capability to the fifth node via the node (for example, the foregoing third node or sixth node) that connects the node to the core network.

In a possible implementation, the fifth node receives a user authorization information query request from a fourth node. The user authorization information query request includes information about a queried node (a type of the node or an identifier of the node), a capability type of a queried capability, a capability invocation parameter, and the like. Further, the fifth node sends the policy information and/or subscription information obtaining request to the fifth node via the node (for example, the foregoing third node or sixth node) that connects the node to the core network. Further, the node may send the policy information and/or subscription information for the first capability to the fifth node via the node (for example, the foregoing third node or sixth node) that connects the node to the core network.

For example, the type of the node is the terminal device. The fourth node (for example, a capability governance function) sends, to the fifth node (for example, a user subscription function), user subscription information that is of a terminal device 1 and that is about a federated learning capability. The fifth node sends the policy information and/or subscription information obtaining request related to the federated learning capability to the terminal device 1 via a connection function. Further, the user may choose, on an interface of the terminal device 1, to add the federated learning capability (namely, newly added subscription information) for the terminal device 1. Further, the terminal device sends the newly added subscription information to the fifth node via the connection function, so that the fifth node sends the newly added subscription information to the fourth node.

S502: The fifth node stores (or records) the policy information and/or subscription information of the node for the first capability.

The fifth node obtains the policy information and/or subscription information of the node for the first capability in Manner 1, Manner 2, or Manner 3 in S501, and stores (or records) the policy information and/or subscription information of the node for the first capability.

Further, the fifth node may authenticate, based on the policy information and/or subscription information of the node for the first capability, permission of the node to invoke the first capability, for example, in S201, the fifth node authenticates whether the first node has the permission to invoke the first capability; or authenticate permission of the node to register the first capability, for example, in S302, the fifth node authenticates whether the second node has the permission to register the first capability; or authenticate permission of the node to discover the first capability, for example, in S302, the fifth node authenticates whether the first node has the permission to discover the first capability.

In conclusion, security of authorization information of various types of nodes can be improved by using the authorization information maintenance method shown in FIG. 5.

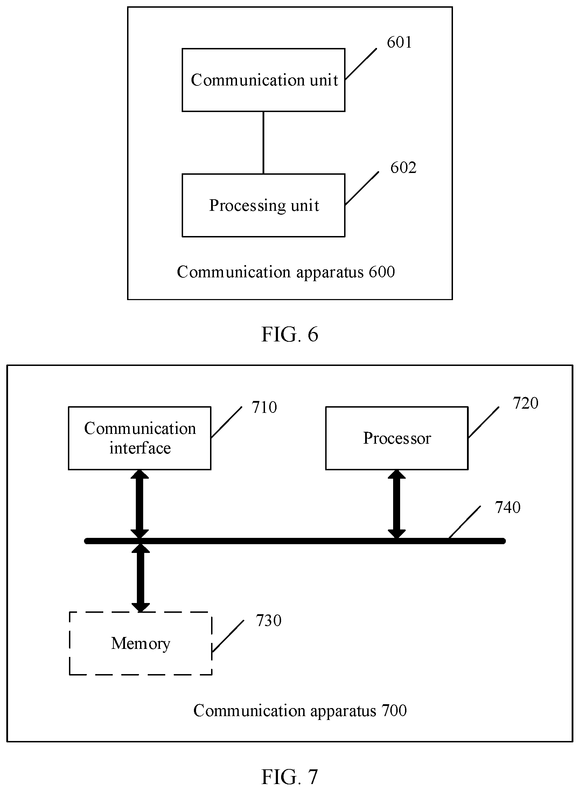

FIG. 6 is a diagram of a structure of a communication apparatus 600 according to an embodiment of this application. The communication apparatus shown in FIG. 6 may be a node (a first node to a fifth node), an apparatus in the node, or an apparatus that can be used in matching with the node. The communication apparatus shown in FIG. 6 may include a communication unit 601 and a processing unit 602. Specifically, the processing unit 602 is configured to process data. The data may be data received by the communication unit 601, and the processed data may also be sent by the communication unit 601.

In an implementation, the communication apparatus 600 is the first node, an apparatus in the first node, or an apparatus that can be used in matching with the first node.

The communication unit 601 is configured to: send a first request message to the second node, where the first request message is used to request the second node to provide a service of a first capability for the first node, and the first capability is a network capability (or a resource) that can be invoked and used; and receive, from the third node, an identifier of a transmission channel between the first node and the second node, where the transmission channel is used to transmit a capability invocation message corresponding to the first capability.

In a possible implementation, the communication unit 601 is configured to send the capability invocation message to the third node. The capability invocation message is used to invoke the first capability of the second node, and the capability invocation message includes the identifier of the transmission channel.

In a possible implementation, the transmission channel includes a transmission link used for signaling exchange, and/or a user plane tunnel used for user plane data exchange.

In a possible implementation, the communication unit 601 is further configured to send a capability discovery request message to the fourth node. The capability discovery request message is used to discover the first capability, and the fourth node is a network device configured to manage a capability. The communication unit 601 is further configured to: receive a capability discovery response message from the fourth node, where the capability discovery response message indicates discovery success for the first capability; and send the first request message to the second node based on the capability discovery response message.

In a possible implementation, the capability discovery response message further includes token information corresponding to the second node, and the first request message includes the token information corresponding to the second node. By implementing this possible implementation, security in a capability invocation process can be improved based on the token information.

In a possible implementation, the first request message further includes information about the first node and first information of the first capability. The information about the first node includes an identifier of the first node or a type of the first node, and the first information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes any one of a computing capability, a data capability, or a sensing capability.

In a possible implementation, the type of the first node is one of the following types: a terminal device, an access network device, an application function AF, or a network function NF; and a type of the second node is one of the following types: a terminal device, an access network device, an AF, or an NF.

In a possible implementation, when the type of the first node is the terminal device or the AF, the communication unit 601 is further configured to send the first request message to the second node via the third node.

In an implementation, the communication apparatus 600 is the second node, an apparatus in the second node, or an apparatus that can be used in matching with the second node.

The communication unit 601 is configured to receive a first request message from the first node. The first request message is used to request the second node to provide a service of a first capability for the first node, and the first capability is a network capability (or a resource) that can be scheduled and used. The communication unit 601 is further configured to send a first response message to the third node (a network device that establishes a transmission channel). The first response message is used to request to establish the transmission channel between the first node and the second node, and the transmission channel is used to transmit a capability invocation message corresponding to the first capability.

In a possible implementation, the communication unit 601 is further configured to receive the capability invocation message from the first node through the transmission channel. The capability invocation message is used to invoke the first capability of the second node.

In a possible implementation, the transmission channel includes a transmission link used for signaling exchange, and/or a user plane tunnel used for user plane data exchange.

In a possible implementation, the communication unit 601 is further configured to: send a second request message to the fourth node, where the second request message is used to register the first capability of the second node, and the fourth node is a network device configured to manage a capability; and receive a second response message from the fourth node, where the second response message indicates a registration result of the second node for the first capability.

In a possible implementation, the communication unit 601 is further configured to: receive a sixth request message from the fourth node, where the sixth request message is used to query whether the second node can provide the service of the first capability for the first node; and send a sixth response message to the fifth node, where the sixth response message indicates that the second node can provide the service of the first capability for the first node.

In a possible implementation, the sixth response message includes token information corresponding to the second node.

In a possible implementation, the first request message further includes information about the first node and first information of the first capability. The information about the first node includes an identifier of the first node or a type of the first node, and the first information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes one or more of a computing capability, a data capability, or a sensing capability.

In a possible implementation, the type of the first node is one of the following types: a terminal device, an access network device, an application function AF, or a network function NF; and a type of the second node is one of the following types: a terminal device, an access network device, an AF, or an NF.

In a possible implementation, the type of the first node is the terminal device or the AF, and the second node receives the first request message from the first node via the third node.

In an implementation, the communication apparatus 600 is the third node, an apparatus in the third node, or an apparatus that can be used in matching with the third node.

The communication unit 601 is configured to receive a first response message from the second node. The first response message is used to request to establish a transmission channel between the first node and the second node, the transmission channel is used to transmit a capability invocation message corresponding to a first capability, and the first capability is a network capability (or a resource) that can be scheduled and used. The processing unit 602 is configured to establish the transmission channel based on the first response message. The communication unit 601 is further configured to send an identifier of the transmission channel to the first node.

In a possible implementation, the communication unit 601 is further configured to: receive a capability invocation message from the first node, where the capability invocation message is used to invoke the first capability of the second node, and the capability invocation message includes the identifier of the transmission channel; and send the capability invocation message to the second node through the transmission channel indicated by the identifier of the transmission channel.

In a possible implementation, the transmission channel includes a transmission link used for signaling exchange, and/or a user plane tunnel used for user plane data exchange.

In a possible implementation, a type of the first node is one of the following types: a terminal device, an access network device, an application function AF, or a network function NF; and a type of the second node is one of the following types: a terminal device, an access network device, an AF, or an NF.

In a possible implementation, when the type of the first node is the terminal device or the AF, the communication unit 601 is further configured to: receive a first request message from the first node, where the first request message is used to request the second node to provide a service of the first capability for the first node; and send the first request message to the second node.

In a possible implementation, the first request message includes information about the first node and first information of the first capability. The information about the first node includes an identifier of the first node or the type of the first node, and the first information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes any one of a computing capability, a data capability, or a sensing capability.

In a possible implementation, the first request message further includes token information corresponding to the second node.

In an implementation, the communication apparatus 600 is the fourth node (a network device configured to manage a capability), an apparatus in the fourth node, or an apparatus that can be used in matching with the fourth node.

The communication unit 601 is further configured to receive a second request message from the second node. The second request message is used to register a first capability of the second node, and the first capability is a network capability (or a resource) that can be scheduled and used. The communication unit 601 is further configured to send a second response message to the second node. The second response message indicates a registration result of the second node for the first capability.

In a possible implementation, the communication unit 601 is further configured to: send a third request message to the fifth node (a network device configured to manage policy information and/or subscription information), where the third request message is used to authenticate permission of the second node to register the first capability; receive a third response message from the fifth node, where the third response message indicates whether the second node is allowed to register the first capability; and send the second response message to the second node based on the third response message.

In a possible implementation, the processing unit 602 is further configured to send the second response message to the second node based on local configuration information via the communication unit 601. The local configuration information includes indication information indicating whether to accept registration of the first capability by the second node.

In a possible implementation, a type of the second node is one of the following types: a terminal device, an access network device, an application function AF, or a network function NF.

In a possible implementation, when the type of the second node is the terminal device or the AF, the communication unit 601 is further configured to: receive the second request message from the second node via a sixth node, where the sixth node is configured to connect the second node to a core network; and send the second response message to the second node via the sixth node.

In a possible implementation, the second request message includes information about the second node and first information of the first capability. The information about the second node includes an identifier of the second node or the type of the second node, and the first information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes one or more of a computing capability, a data capability, or a sensing capability.

In a possible implementation, the third request message includes the information about the second node and second information of the first capability, and the second information of the first capability includes at least one or more of the following: the type of the first capability, the name of the first capability, and the version of the first capability.

In a possible implementation, if the registration result is registration failure, the second response message further includes a cause value corresponding to the registration failure; or if the registration result is registration success, the communication apparatus further includes a storage unit (not shown in the figure), and the storage unit is configured to store the first capability of the second node.

In an implementation, the communication apparatus 600 is the second node, an apparatus in the second node, or an apparatus that can be used in matching with the second node.

The communication unit 601 is configured to send a second request message to the fourth node (a network device configured to manage a capability). The second request message is used to register a first capability of the second node, and the first capability is a network capability (or a resource) that can be scheduled and used. The communication unit 601 is further configured to receive a second response message from the fourth node. The second response message indicates a registration result of the second node for the first capability.

In a possible implementation, a type of the second node is one of the following types: a terminal device, an access network device, an application function AF, or a network function NF.

In a possible implementation, the type of the second node is the terminal device or the AF. The communication unit 601 is further configured to: send the second request message to a first network device via a sixth node, where the sixth node is configured to connect the second node to a core network; and receive the second response message from the fourth node via the sixth node.

In a possible implementation, the second request message includes information about the second node and first information of the first capability. The information about the second node includes an identifier of the second node or the type of the second node, and the first information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes one or more of a computing capability, a data capability, or a sensing capability.

In a possible implementation, the registration result is registration failure, and the second response message further includes a cause value corresponding to the registration failure.

In an implementation, the communication apparatus 600 is the fourth node (a network device configured to manage a capability), an apparatus in the fourth node, or an apparatus that can be used in matching with the fourth node.

The communication unit 601 is configured to receive a fourth request message from the first node. The fourth request message is used to request to discover a first capability, and the first capability is a network capability (or a resource) that can be scheduled and used. The communication unit 601 is further configured to send a fourth response message to the first node. The fourth response message indicates a discovery result for the first capability.

In a possible implementation, the communication unit 601 is further configured to: send a fifth request message to the fifth node (a network device configured to manage policy information and/or subscription information), where the fifth request message is used to authenticate permission of the first node to discover the first capability; and receive a fifth response message from the fifth node, where the fifth response message indicates whether the first node is allowed to discover the first capability. The fourth node sends the fourth response message to the first node based on the fifth response message.

In a possible implementation, the processing unit 602 is configured to send the fourth response message to the first node based on local configuration information via the communication unit 601. The local configuration information includes indication information indicating whether to accept discovery of the first node for the first capability.

In a possible implementation, a type of the first node is one of the following types: a terminal device, an access network device, an application function AF, or a network function NF.

In a possible implementation, when the type of the first node is the terminal device or the AF, the fourth node receives the fourth request message from the first node via the third node. The third node is configured to connect the first node to a core network. In addition, the fourth node sends the fourth response message to the first node via the third node.

In a possible implementation, the fourth request message includes information about the first node and third information of the first capability. The information about the first node includes an identifier of the first node or the type of the first node, and the third information of the first capability includes one or more of the following information: a type of a node that provides the first capability, a type of the first capability, a name of the first capability, and a version of the first capability.

In a possible implementation, the type of the first capability includes any one of a computing capability, a data capability, or a sensing capability.

In a possible implementation, the fifth request message includes the information about the first node and second information of the first capability, and the second information of the first capability includes at least one or more of the following: the type of the first capability, the name of the first capability, and the version of the first capability.

In a possible implementation, the fourth response message indicates that the discovery result for the first capability is capability discovery failure, and the fourth response message further includes a cause value corresponding to the capability discovery failure.

In a possible implementation, the fourth response message indicates that the discovery result for the first capability is capability discovery success. The fourth response message further includes a capability list corresponding to the first capability, and the capability list includes first information of the first capability, or the capability list includes a plurality of nodes that provide the first capability and first information of the first capability corresponding to each node. The first information of the first capability includes one or more of the following information: the type of the first capability, the name of the first capability, the version of the first capability, an invocation parameter of the first capability, an interface address of the first capability, and a network identifier corresponding to the first capability.

In a possible implementation, the fourth response message indicates that the discovery result for the first capability is capability discovery success. The processing unit 602 is further configured to determine the second node. The second node is configured to provide a service of the first capability for the first node. The communication unit 601 is further configured to: send a sixth request message to the second node, where the sixth request message is used to query whether the second node can provide the service of the first capability for the first node; and receive a sixth response message from the second node, where the sixth response message indicates that the second node can provide the service of the first capability for the first node.

In a possible implementation, the communication unit 601 is further configured to obtain requirement information of the first node for invoking the service of the first capability. The processing unit 602 is further configured to determine the second node based on the requirement information. The requirement information includes one or more of the following information: a service requirement of the first node for the first capability, a location correlation requirement between the first node and the second node that provides the first capability, a load status of the second node, or a priority of the second node selected by the first node to provide the first capability.

In a possible implementation, the sixth response message further includes token information corresponding to the second node, and the fourth response message further includes the token information.

In an implementation, the communication apparatus 600 is the first node, an apparatus in the first node, or an apparatus that can be used in matching with the first node.

The communication unit 601 is further configured to: send a fourth request message to the fourth node (a network device configured to manage a capability), where the fourth request message is used to request to discover a first capability, and the first capability is a network capability (or a resource) that can be scheduled and used; and receive a fourth response message from the fourth node, where the fourth response message indicates a discovery result for the first capability.

In a possible implementation, a type of the first node is one of the following types: a terminal device, an access network device, an application function AF, or a network function NF.

In a possible implementation, when the type of the first node is the terminal device or the AF, the communication unit 601 is further configured to: send the fourth request message to the fourth node via the third node, where the third node is configured to connect the first node to a core network; and receive the fourth response message from the fourth node via the third node.

In a possible implementation, the fourth request message includes information about the first node and third information of the first capability. The information about the first node includes an identifier of the first node or the type of the first node, and the third information of the first capability includes one or more of the following information: a type of a node that provides the first capability, a type of the first capability, a name of the first capability, and a version of the first capability.

In a possible implementation, the fourth response message indicates that the discovery result for the first capability is capability discovery failure, and the fourth response message further includes a cause value corresponding to the capability discovery failure.

In a possible implementation, the fourth response message indicates that the discovery result for the first capability is capability discovery success. The fourth response message further includes a capability list corresponding to the first capability, and the capability list includes first information of the first capability, or the capability list includes a plurality of nodes that provide the first capability and first information of the first capability corresponding to each node. The first information of the first capability includes one or more of the following information: the type of the first capability, the name of the first capability, the version of the first capability, an invocation parameter of the first capability, an interface address of the first capability, and a network identifier corresponding to the first capability.

In a possible implementation, the fourth response message indicates that the discovery result for the first capability is capability discovery success, and the fourth response message further includes token information corresponding to the second node.

In an implementation, the communication apparatus 600 is the fifth node (a network device configured to manage subscription information and/or policy information), an apparatus in the fifth node, or an apparatus that can be used in matching with the fifth node.

The communication unit 601 is configured to obtain policy information and/or subscription information of a node for a first capability. The first capability is a network capability (or a resource) that can be invoked. The communication apparatus further includes a storage unit (not shown in the figure), and the storage unit is configured to record the policy information and/or subscription information of the node for the first capability.

In a possible implementation, a type of the node is one of the following types: a terminal device, an access network device, an application function AF, or a network function NF.

In a possible implementation, the node is the terminal device or the AF. In this case, the fifth node receives the policy information and/or subscription information from the node via the third node. The third node is configured to connect the node to a core network.

In a possible implementation, the communication unit 601 is further configured to send a policy information and/or subscription information obtaining request to the node via the third node.

In a possible implementation, the node is a node that requests to invoke the first capability. The fifth node receives an authentication request message from the third node. The authentication request message is used to authenticate permission of the node to invoke the first capability. The fifth node sends an authentication response message to the third node. The authentication response message indicates whether the node has the permission to invoke the first capability.

In a possible implementation, the authentication request message includes information about the node and second information of the first capability. The information about the node includes an identifier of the node or the type of the node. The second information of the first capability includes one or more of the following information: a type of the first capability, a name of the first capability, a version of the first capability, an invocation parameter of the first capability, an interface address of the first capability, and a network identifier corresponding to the first capability.

In a possible implementation, the type of the first capability includes any one of a computing capability, a data capability, or a sensing capability.

In a possible implementation, the node is a node that requests to register the first capability. The communication unit 601 is further configured to: receive a third request message from the fourth node, where the third request message is used to authenticate permission of the node to register the first capability, and the fourth node is a network device configured to manage a capability; and send a third response message to the fourth node based on the policy information and/or subscription information corresponding to the node, where the third response message indicates whether the node is allowed to register the first capability.

In a possible implementation, the third request message includes the information about the node and the second information of the first capability. The information about the node includes the identifier of the node or the type of the node, and the second information of the first capability includes at least one or more of the following: the type of the first capability, the name of the first capability, and the version of the first capability.

In a possible implementation, the node is a node that requests to discover the first capability. The communication unit 601 is further configured to: receive a fifth request message sent by the fourth node, where the fifth request message is used to authenticate permission of the node to discover the first capability; and send a fifth response message to the fourth node based on the policy information and/or subscription information corresponding to the node, where the fifth response message indicates whether the node is allowed to discover the first capability.

In a possible implementation, the fifth request message includes the information about the node and third information of the first capability. The information about the node includes the identifier of the node or the type of the node, and the third information of the first capability includes at least one or more of the following: a type of a node that provides the first capability, the type of the first capability, the name of the first capability, and the version of the first capability.

FIG. 7 shows a communication apparatus 700 according to an embodiment of this application. The communication apparatus 700 is configured to implement functions of the foregoing node (one or more of the first node to the fifth node). The apparatus may be a node or an apparatus used in the node. The apparatus used in the node may be a chip system or a chip in the node. The chip system may include a chip, or may include a chip and another discrete device.

The communication apparatus 700 includes at least one processor 720, configured to implement a data processing function of the node in the methods provided in embodiments of this application. The communication apparatus 700 may further include a communication interface 710, configured to implement sending and receiving operations of the node in the methods provided in embodiments of this application. In this embodiment of this application, the communication interface may be a transceiver, a circuit, a bus, a module, or another type of communication interface, and is configured to communicate with another device by using a transmission medium. For example, the communication interface 710 is used for an apparatus in the communication apparatus 700 to communicate with another device. The processor 720 receives and sends data through the communication interface 710, and is configured to implement the methods in the foregoing method embodiments.

The communication apparatus 700 may further include at least one memory 730, configured to store program instructions and/or data. The memory 730 is coupled to the processor 720. The coupling in embodiments of this application may be indirect coupling or a communication connection between apparatuses, units, or modules in an electrical form, a mechanical form, or another form, and is used for information exchange between the apparatuses, the units, or the modules. The processor 720 may cooperate with the memory 730. The processor 720 may execute the program instructions stored in the memory 730. At least one of the at least one memory may be included in the processor.

A specific connection medium between the communication interface 710, the processor 720, and the memory 730 is not limited in this embodiment of this application. In this embodiment of this application, the memory 730, the processor 720, and the communication interface 710 are connected through a bus 740 in FIG. 7, and the bus is represented by a bold line in FIG. 7. A manner of a connection between other components is merely an example for description, and is not limited thereto. The bus may be classified into an address bus, a data bus, a control bus, and the like. For ease of representation, only one bold line is used for representation in FIG. 7, but this does not mean that there is only one bus or only one type of bus.

When the communication apparatus 700 is specifically the apparatus used in the node, for example, when the communication apparatus 700 is specifically the chip or the chip system, the communication interface 710 may output or receive a baseband signal. When the communication apparatus 700 is specifically the node, the communication interface 710 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed in embodiments of this application may be directly performed by a hardware processor, or may be performed by using a combination of hardware and software modules in the processor.

An embodiment of this application further provides a computer-readable storage medium. The computer-readable storage medium stores computer-executable instructions. When the computer-executable instructions are executed, the methods performed by the node in the foregoing method embodiments are implemented.

An embodiment of this application further provides a computer program product. The computer program product includes a computer program. When the computer program is executed, the methods performed by the node in the foregoing method embodiments are implemented.

An embodiment of this application further provides a communication system. The communication system includes a first node, a second node, and a third node; or includes a second node and a fourth node; or includes a first node and a fourth node; or include a fifth node. For example, the communication system includes the first node to the fifth node. The first node is configured to perform the method performed by the first node in the foregoing method embodiments. The second node is configured to perform the method performed by the second node in the foregoing method embodiments. The third node is configured to perform the method performed by the third node in the foregoing method embodiments. The fourth node is configured to perform the method performed by the fourth node in the foregoing method embodiments. The fifth node is configured to perform the method performed by the fifth node in the foregoing method embodiments.

It should be noted that for ease of brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that embodiments described in this specification all belong to example embodiments, and the involved actions and modules are not necessarily required by this application.

The descriptions of embodiments provided in this application may refer to each other, and the descriptions of embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A capability invocation method, wherein the method is applied to a first node, and the method comprises:
sending a first request message to a second node, wherein the first request message is used to request the second node to provide a service of a first capability for the first node, and the first capability is a network capability that is able to be scheduled and used; and
receiving an identifier that is sent by a third node and that is of a transmission channel between the first node and the second node, wherein the transmission channel is used to transmit a capability invocation message corresponding to the first capability.

2. The method according to claim 1, wherein the method further comprises:
sending the capability invocation message to the third node, wherein the capability invocation message is used to invoke the first capability of the second node, and the capability invocation message comprises the identifier of the transmission channel.

3. The method according to claim 1 or 2, wherein the transmission channel comprises a transmission link used for signaling exchange, and/or a user plane tunnel used for user plane data exchange.

4. The method according to any one of claims 1 to 3, wherein the method further comprises:
sending a capability discovery request message to a fourth node, wherein the capability discovery request message is used to discover the first capability, and the fourth node is a network device configured to manage a capability; and
receiving a capability discovery response message from the fourth node, wherein the capability discovery response message indicates discovery success for the first capability; and
the sending a first request message to a second node comprises:
sending the first request message to the second node based on the capability discovery response message.

5. The method according to claim 4, wherein the capability discovery response message further comprises token information corresponding to the second node, and the first request message comprises the token information corresponding to the second node.

6. The method according to any one of claims 1 to 5, wherein the first request message further comprises information about the first node and first information of the first capability; and
the information about the first node comprises an identifier of the first node or a type of the first node, and the first information of the first capability comprises one or more of the following information: a type of the first capability, a name of the first capability, a version of the first capability, an invocation parameter of the first capability, an interface address of the first capability, and a network identifier corresponding to the first capability.

7. The method according to claim 6, wherein the type of the first capability comprises any one of a computing capability, a data capability, or a sensing capability.

8. The method according to any one of claims 1 to 7, wherein the type of the first node is one of the following types: a terminal device, an access network device, an application function AF, or a network function NF; and a type of the second node is one of the following types: a terminal device, an access network device, an AF, or an NF.

9. The method according to claim 8, wherein when the type of the first node is the terminal device or the AF, the sending a first request message to a second node comprises:
sending the first request message to the second node via the third node.

10. A capability invocation method, wherein the method is applied to a second node, and the method comprises:
receiving a first request message from a first node, wherein the first request message is used to request the second node to provide a service of a first capability for the first node, and the first capability is a network capability that is able to be scheduled and used; and
sending a first response message to a third node, wherein the first response message is used to request to establish a transmission channel between the first node and the second node, the transmission channel is used to transmit a capability invocation message corresponding to the first capability, and the third node is a network device that establishes the transmission channel.

11. The method according to claim 10, wherein the method further comprises:
receiving the capability invocation message from the first node through the transmission channel, wherein the capability invocation message is used to invoke the first capability of the second node.

12. The method according to claim 10 or 11, wherein the transmission channel comprises a transmission link used for signaling exchange, and/or a user plane tunnel used for user plane data exchange.

13. The method according to any one of claims 10 to 12, wherein the method further comprises:
sending a second request message to a fourth node, wherein the second request message is used to register the first capability of the second node, and the fourth node is a network device configured to manage a capability; and
receiving a second response message from the fourth node, wherein the second response message indicates a registration result of the second node for the first capability.

14. The method according to claim 13, wherein the method further comprises:
receiving a sixth request message from the fourth node, wherein the sixth request message is used to query whether the second node is able to provide the service of the first capability for the first node; and
sending a sixth response message to a fifth node, wherein the sixth response message indicates that the second node is able to provide the service of the first capability for the first node.

15. The method according to claim 14, wherein the sixth response message comprises token information corresponding to the second node.

16. The method according to any one of claims 10 to 15, wherein the first request message further comprises information about the first node and first information of the first capability; and
the information about the first node comprises an identifier of the first node or a type of the first node, and the first information of the first capability comprises one or more of the following information: a type of the first capability, a name of the first capability, a version of the first capability, an invocation parameter of the first capability, an interface address of the first capability, and a network identifier corresponding to the first capability.

17. The method according to claim 16, wherein the type of the first capability comprises one or more of a computing capability, a data capability, or a sensing capability.

18. The method according to any one of claims 10 to 17, wherein the type of the first node is one of the following types: a terminal device, an access network device, an application function AF, or a network function NF; and a type of the second node is one of the following types: a terminal device, an access network device, an AF, or an NF.

19. The method according to claim 18, wherein the type of the first node is the terminal device or the AF, and the receiving a first request message from a first node comprises:
receiving the first request message from the first node via the third node.

20. A capability invocation method, wherein the method is applied to a third node, and the method further comprises:
receiving a first response message from a second node, wherein the first response message is used to request to establish a transmission channel between a first node and the second node, the transmission channel is used to transmit a capability invocation message corresponding to a first capability, and the first capability is a network capability that is able to be scheduled and used;
establishing the transmission channel based on the first response message; and
sending an identifier of the transmission channel to the first node.

21. The method according to claim 20, wherein the method further comprises:
receiving a capability invocation message from the first node, wherein the capability invocation message is used to invoke the first capability of the second node, and the capability invocation message comprises the identifier of the transmission channel; and
sending the capability invocation message to the second node through the transmission channel indicated by the identifier of the transmission channel.

22. The method according to claim 20 or 21, wherein the transmission channel comprises a transmission link used for signaling exchange, and/or a user plane tunnel used for user plane data exchange.

23. The method according to any one of claims 19 to 22, wherein a type of the first node is one of the following types: a terminal device, an access network device, an application function AF, or a network function NF; and a type of the second node is one of the following types: a terminal device, an access network device, an AF, or an NF.

24. The method according to claim 23, wherein when the type of the first node is the terminal device or the AF, the method further comprises:
receiving a first request message from the first node, wherein the first request message is used to request the second node to provide a service of the first capability for the first node; and
sending the first request message to the second node.

25. The method according to claim 24, wherein the first request message comprises information about the first node and first information of the first capability; and
the information about the first node comprises an identifier of the first node or the type of the first node, and the first information of the first capability comprises one or more of the following information: a type of the first capability, a name of the first capability, a version of the first capability, an invocation parameter of the first capability, an interface address of the first capability, and a network identifier corresponding to the first capability.

26. The method according to claim 25, wherein the type of the first capability comprises any one of a computing capability, a data capability, or a sensing capability.

27. The method according to any one of claims 24 to 26, wherein the first request message further comprises token information corresponding to the second node.

28. A capability registration method, wherein the method is applied to a fourth node, the fourth node is a network device configured to manage a capability, and the method comprises:
receiving a second request message from a second node, wherein the second request message is used to register a first capability of the second node, and the first capability is a network capability that is able to be scheduled and used; and
sending a second response message to the second node, wherein the second response message indicates a registration result of the second node for the first capability.

29. The method according to claim 28, wherein the method further comprises:
sending a third request message to a fifth node, wherein the third request message is used to authenticate permission of the second node to register the first capability, and the fifth node is a network device configured to manage policy information and/or subscription information; and
receiving a third response message from the fifth node, wherein the third response message indicates whether the second node is allowed to register the first capability; and
the sending a second response message to the second node comprises:
sending the second response message to the second node based on the third response message.

30. The method according to claim 28 or 29, wherein the sending a second response message to the second node comprises:
sending the second response message to the second node based on local configuration information, wherein the local configuration information comprises indication information indicating whether to accept registration of the first capability by the second node.

31. The method according to any one of claims 28 to 30, wherein a type of the second node is one of the following types: a terminal device, an access network device, an application function AF, or a network function NF.

32. The method according to claim 31, wherein when the type of the second node is the terminal device or the AF,
the receiving a second request message from a second node comprises:
receiving the second request message from the second node via a sixth node, wherein the sixth node is configured to connect the second node to a core network; and
the sending a second response message to the second node comprises:
sending the second response message to the second node via the sixth node.

33. The method according to any one of claims 28 to 32, wherein the second request message comprises information about the second node and first information of the first capability; and
the information about the second node comprises an identifier of the second node or the type of the second node, and the first information of the first capability comprises one or more of the following information: a type of the first capability, a name of the first capability, a version of the first capability, an invocation parameter of the first capability, an interface address of the first capability, and a network identifier corresponding to the first capability.

34. The method according to claim 33, wherein the type of the first capability comprises one or more of a computing capability, a data capability, or a sensing capability.

35. The method according to claim 33 or 34, wherein the third request message comprises the information about the second node and second information of the first capability, and the second information of the first capability comprises at least one or more of the following: the type of the first capability, the name of the first capability, and the version of the first capability.

36. The method according to any one of claims 28 to 35, wherein
if the registration result is registration failure, the second response message further comprises a cause value corresponding to the registration failure; or
if the registration result is registration success, the method further comprises: storing the first capability of the second node.

37. A capability registration method, wherein the method is applied to a second node, and the method comprises:
sending a second request message to a fourth node, wherein the second request message is used to register a first capability of the second node, the first capability is a network capability that is able to be scheduled and used, and the fourth node is a network device configured to manage a capability; and
receiving a second response message from the fourth node, wherein the second response message indicates a registration result of the second node for the first capability.

38. The method according to claim 37, wherein a type of the second node is one of the following types: a terminal device, an access network device, an application function AF, or a network function NF.

39. The method according to claim 38, wherein the type of the second node is the terminal device or the AF;
the sending a second request message to a fourth node comprises:
sending the second request message to a first network device via a sixth node, wherein the sixth node is configured to connect the second node to a core network; and
the receiving a second response message from the fourth node comprises:
receiving the second response message from the fourth node via the sixth node.

40. The method according to any one of claims 37 to 39, wherein the second request message comprises information about the second node and first information of the first capability; and
the information about the second node comprises an identifier of the second node or the type of the second node, and the first information of the first capability comprises one or more of the following information: a type of the first capability, a name of the first capability, a version of the first capability, an invocation parameter of the first capability, an interface address of the first capability, and a network identifier corresponding to the first capability.

41. The method according to claim 40, wherein the type of the first capability comprises one or more of a computing capability, a data capability, or a sensing capability.

42. The method according to any one of claims 37 to 41, wherein the registration result is registration failure, and the second response message further comprises a cause value corresponding to the registration failure.

43. A capability discovery method, wherein the method is applied to a fourth node, the fourth node is a network device configured to manage a capability, and the method comprises:
receiving a fourth request message from a first node, wherein the fourth request message is used to request to discover a first capability, and the first capability is a network capability that is able to be scheduled and used; and
sending a fourth response message to the first node, wherein the fourth response message indicates a discovery result for the first capability.

44. The method according to claim 43, wherein the method further comprises:
sending a fifth request message to a fifth node, wherein the fifth request message is used to authenticate permission of the first node to discover the first capability, and the fifth node is a network device configured to manage policy information and/or subscription information; and
receiving a fifth response message from the fifth node, wherein the fifth response message indicates whether the first node is allowed to discover the first capability; and
the sending a fourth response message to the first node comprises:
sending the fourth response message to the first node based on the fifth response message.

45. The method according to claim 43 or 44, wherein the sending a fourth response message to the first node comprises:
sending the fourth response message to the first node based on local configuration information, wherein the local configuration information comprises indication information indicating whether to accept discovery of the first node for the first capability.

46. The method according to any one of claims 43 to 45, wherein a type of the first node is one of the following types: a terminal device, an access network device, an application function AF, or a network function NF.

47. The method according to claim 46, wherein when the type of the first node is the terminal device or the AF, the receiving a fourth request message from a first node comprises:
receiving the fourth request message from the first node via a third node, wherein the third node is configured to connect the first node to a core network; and
the sending a fourth response message to the first node comprises:
sending the fourth response message to the first node via the third node.

48. The method according to any one of claims 43 to 47, wherein the fourth request message comprises information about the first node and third information of the first capability; and
the information about the first node comprises an identifier of the first node or the type of the first node, and the third information of the first capability comprises one or more of the following information: a type of a node that provides the first capability, a type of the first capability, a name of the first capability, and a version of the first capability.

49. The method according to claim 48, wherein the type of the first capability comprises any one of a computing capability, a data capability, or a sensing capability.

50. The method according to claim 48 or 49, wherein the fifth request message comprises the information about the first node and second information of the first capability, and the second information of the first capability comprises at least one or more of the following: the type of the first capability, the name of the first capability, and the version of the first capability.

51. The method according to any one of claims 42 to 50, wherein the fourth response message indicates that the discovery result for the first capability is capability discovery failure, and the fourth response message further comprises a cause value corresponding to the capability discovery failure.

52. The method according to any one of claims 42 to 50, wherein the fourth response message indicates that the discovery result for the first capability is capability discovery success; and the fourth response message further comprises a capability list corresponding to the first capability, and the capability list comprises first information of the first capability, or the capability list comprises a plurality of nodes that provide the first capability and first information of the first capability corresponding to each node; and
the first information of the first capability comprises one or more of the following information: the type of the first capability, the name of the first capability, the version of the first capability, an invocation parameter of the first capability, an interface address of the first capability, and a network identifier corresponding to the first capability.

53. The method according to any one of claims 42 to 50, wherein the fourth response message indicates that the discovery result for the first capability is capability discovery success, and the method further comprises:
determining a second node, wherein the second node is configured to provide a service of the first capability for the first node;
sending a sixth request message to the second node, wherein the sixth request message is used to query whether the second node is able to provide the service of the first capability for the first node; and
receiving a sixth response message from the second node, wherein the sixth response message indicates that the second node is able to provide the service of the first capability for the first node.

54. The method according to claim 53, wherein the determining a second node comprises:
obtaining requirement information of the first node for invoking the service of the first capability; and
determining the second node based on the requirement information, wherein the requirement information comprises one or more of the following information: a service requirement of the first node for the first capability, a location correlation requirement between the first node and the second node that provides the first capability, a load status of the second node, or a priority of the second node selected by the first node to provide the first capability.

55. The method according to claim 53 or 54, wherein the sixth response message further comprises token information corresponding to the second node, and the fourth response message further comprises the token information.

56. A capability discovery method, wherein the method is applied to a first node, and the method comprises:
sending a fourth request message to a fourth node, wherein the fourth request message is used to request to discover a first capability, the first capability is a network capability that is able to be scheduled and used, and the fourth node is a network device configured to manage a capability; and
receiving a fourth response message from the fourth node, wherein the fourth response message indicates a discovery result for the first capability.

57. The method according to claim 56, wherein a type of the first node is one of the following types: a terminal device, an access network device, an application function AF, or a network function NF.

58. The method according to claim 57, wherein when the type of the first node is the terminal device or the AF, the sending a fourth request message to a fourth node comprises:
sending the fourth request message to the fourth node via a third node, wherein the third node is configured to connect the first node to a core network; and
the receiving a fourth response message from the fourth node comprises:
receiving the fourth response message from the fourth node via the third node.

59. The method according to any one of claims 56 to 58, wherein the fourth request message comprises information about the first node and third information of the first capability; and
the information about the first node comprises an identifier of the first node or the type of the first node, and the third information of the first capability comprises one or more of the following information: a type of a node that provides the first capability, a type of the first capability, a name of the first capability, and a version of the first capability.

60. The method according to any one of claims 56 to 59, wherein the fourth response message indicates that the discovery result for the first capability is capability discovery failure, and the fourth response message further comprises a cause value corresponding to the capability discovery failure.

61. The method according to any one of claims 56 to 59, wherein the fourth response message indicates that the discovery result for the first capability is capability discovery success; and the fourth response message further comprises a capability list corresponding to the first capability, and the capability list comprises first information of the first capability, or the capability list comprises a plurality of nodes that provide the first capability and first information of the first capability corresponding to each node; and
the first information of the first capability comprises one or more of the following information: the type of the first capability, the name of the first capability, the version of the first capability, an invocation parameter of the first capability, an interface address of the first capability, and a network identifier corresponding to the first capability.

62. The method according to any one of claims 56 to 59, wherein the fourth response message indicates that the discovery result for the first capability is capability discovery success, and the fourth response message further comprises token information corresponding to the second node.

63. An authorization information maintenance method, wherein the method is applied to a fifth node, the fifth node is a network device configured to manage subscription information and/or policy information, and the method comprises:
obtaining policy information and/or subscription information of a node for a first capability, wherein the first capability is a network capability that is able to be invoked; and
recording the policy information and/or subscription information of the node for the first capability.

64. The method according to claim 63, wherein a type of the node is one of the following types: a terminal device, an access network device, an application function AF, or a network function NF.

65. The method according to claim 64, wherein the node is the terminal device or the AF, and the obtaining policy information and/or subscription information of a node for a first capability comprises:
receiving the policy information and/or subscription information from the node via a third node, wherein the third node is configured to connect the node to a core network.

66. The method according to claim 65, wherein the method further comprises:
sending a policy information and/or subscription information obtaining request to the node via the third node.

67. The method according to claim 65 or 66, wherein the node is a node that requests to invoke the first capability, and the method further comprises:
receiving an authentication request message from the third node, wherein the authentication request message is used to authenticate permission of the node to invoke the first capability; and
sending an authentication response message to the third node, wherein the authentication response message indicates whether the node has the permission to invoke the first capability.

68. The method according to claim 67, wherein the authentication request message comprises information about the node and second information of the first capability;
the information about the node comprises an identifier of the node or the type of the node; and
the second information of the first capability comprises one or more of the following information: a type of the first capability, a name of the first capability, a version of the first capability, an invocation parameter of the first capability, an interface address of the first capability, and a network identifier corresponding to the first capability.

69. The method according to claim 68, wherein the type of the first capability comprises any one of a computing capability, a data capability, or a sensing capability.

70. The method according to any one of claims 63 to 69, wherein the node is a node that requests to register the first capability, and the method further comprises:
receiving a third request message from a fourth node, wherein the third request message is used to authenticate permission of the node to register the first capability, and the fourth node is a network device configured to manage a capability; and
sending a third response message to the fourth node based on the policy information and/or subscription information corresponding to the node, wherein the third response message indicates whether the node is allowed to register the first capability.

71. The method according to claim 70, wherein the third request message comprises the information about the node and the second information of the first capability; and
the information about the node comprises the identifier of the node or the type of the node, and the second information of the first capability comprises at least one or more of the following: the type of the first capability, the name of the first capability, and the version of the first capability.

72. The method according to any one of claims 63 to 71, wherein the node is a node that requests to discover the first capability, and the method further comprises:
receiving a fifth request message sent by the fourth node, wherein the fifth request message is used to authenticate permission of the node to discover the first capability; and
sending a fifth response message to the fourth node based on the policy information and/or subscription information corresponding to the node, wherein the fifth response message indicates whether the node is allowed to discover the first capability.

73. The method according to claim 72, wherein the fifth request message comprises the information about the node and third information of the first capability; and
the information about the node comprises the identifier of the node or the type of the node, and the third information of the first capability comprises at least one or more of the following: a type of a node that provides the first capability, the type of the first capability, the name of the first capability, and the version of the first capability.

74. A communication apparatus, comprising a processor and a memory, wherein the processor is coupled to the memory, and the processor is configured to implement the method according to any one of claims 1 to 9, or the processor is configured to implement the method according to any one of claims 10 to 19, or the processor is configured to implement the method according to any one of claims 20 to 27; or
the processor is configured to implement the method according to any one of claims 28 to 36, or the processor is configured to implement the method according to any one of claims 37 to 42; or
the processor is configured to implement the method according to any one of claims 43 to 55, or the processor is configured to implement the method according to any one of claims 56 to 62; or
the processor is configured to implement the method according to any one of claims 63 to 73.

75. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 9 by using a logic circuit or by executing code instructions, or the processor is configured to implement the method according to any one of claims 10 to 19 by using a logic circuit or by executing code instructions, or the processor is configured to implement the method according to any one of claims 20 to 27 by using a logic circuit or by executing code instructions; or
the processor is configured to implement the method according to any one of claims 28 to 36 by using a logic circuit or by executing code instructions, or the processor is configured to implement the method according to any one of claims 37 to 42 by using a logic circuit or by executing code instructions; or
the processor is configured to implement the method according to any one of claims 43 to 55 by using a logic circuit or by executing code instructions, or the processor is configured to implement the method according to any one of claims 56 to 62 by using a logic circuit or by executing code instructions; or
the processor is configured to implement the method according to any one of claims 63 to 73 by using a logic circuit or by executing code instructions.

76. A computer-readable storage medium, wherein the storage medium stores a computer program or instructions; and when the computer program or the instructions are run by a communication apparatus, the method according to any one of claims 1 to 9 is implemented, or the method according to any one of claims 10 to 19 is implemented, or the method according to any one of claims 20 to 27 is implemented; or
the method according to any one of claims 28 to 36 is implemented, or the method according to any one of claims 37 to 42 is implemented; or
the method according to any one of claims 43 to 55 is implemented, or the method according to any one of claims 56 to 62 is implemented; or
the method according to any one of claims 63 to 73 is implemented.

77. A computer program product, wherein when a computer reads and executes the computer program product, the computer is enabled to perform the method according to any one of claims 1 to 9, or the computer is enabled to perform the method according to any one of claims 10 to 19, or the computer is enabled to perform the method according to any one of claims 20 to 27; or
the computer is enabled to perform the method according to any one of claims 28 to 36, or the computer is enabled to perform the method according to any one of claims 37 to 42; or
the computer is enabled to perform the method according to any one of claims 43 to 55, or the computer is enabled to perform the method according to any one of claims 56 to 62; or
the computer is enabled to perform the method according to any one of claims 63 to 73.

78. A communication system, comprising a first node, a second node, and a third node, wherein the first node is configured to perform the method according to any one of claims 1 to 9, the second node is configured to perform the method according to any one of claims 10 to 19, and the third node is configured to perform the method according to any one of claims 20 to 27; or
comprising a second node and a fourth node, wherein the fourth node is configured to perform the method according to any one of claims 28 to 36, and the second node is configured to perform the method according to any one of claims 37 to 42; or
comprising a first node and a fourth node, wherein the fourth node is configured to perform the method according to any one of claims 43 to 55, and the first node is configured to perform the method according to any one of claims 56 to 62; or
comprising a fifth node, wherein the fifth node is configured to perform the method according to any one of claims 63 to 73.

79. A communication apparatus, comprising a function or unit configured to: perform the method according to any one of claims 1 to 9, or perform the method according to any one of claims 10 to 19, or perform the method according to any one of claims 20 to 27; or
comprising a function or unit configured to: perform the method according to any one of claims 28 to 36, or perform the method according to any one of claims 37 to 42; or
comprising a function or unit configured to: perform the method according to any one of claims 43 to 55, or perform the method according to any one of claims 56 to 62; or
comprising a function or unit configured to perform the method according to any one of claims 63 to 73.
